# EUROPÄISCHE PATENTSCHRIFT

(11) **EP 2 443 351 B1**
(45) Veröffentlichungstag und Bekanntmachung des Hinweises auf die Patenterteilung: **29.07.2015**
(21) Anmeldenummer: 10740499.8
(22) Anmeldetag: 10.06.2010
(51) Int. Cl.: F16B 5/02, F16B 43/00

(54) **BEFESTIGUNGSEINRICHTUNG UND AUSKLEIDUNGSMATERIAL**
ARRANGEMENT FOR SECURING AND LINING MATERIAL
DISPOSITIF DE FIXATION ET MATÉRIAU DE REVÊTEMENT

(30) Priorität: 18.06.2009 DE 102009029801; 09.07.2009 DE 102009032650
(43) Veröffentlichungstag der Anmeldung: 25.04.2012
(73) Patentinhaber: Plasticon Germany GmbH, 46539 Dinslaken (DE)
(72) Erfinder: VAN LAAK, Hermann, 46569 Hünxe (DE)
(74) Vertreter: Demski, Siegfried
(86) Internationale Anmeldenummer: PCT/DE2010/000647
(87) Internationale Veröffentlichungsnummer: WO 2010/145636

(56) Entgegenhaltungen:
- DE-A1-102005 017 921
- DE-A1-102007 026 733
- FR-A1- 2 846 018

## Beschreibung

Die Erfindung betrifft eine Befestigungseinrichtung und ein Auskleidungsmaterial für die Wandinnenfläche einer von einem gasförmigen oder flüssigen Medium beaufschlagten tragenden Konstruktion, wie ein Behälter, Apparat, Kanal, Gehäuse oder eine Kolonne, wobei mehrere verteilt angeordnete Befestigungspunkte mit der Wandinnenfläche verbunden und zur Befestigung des Auskleidungsmaterial vorgesehen sind.

Gattungsgemäße Befestigungseinrichtungen werden beispielsweise zur Auskleidung von tragenden Konstruktionen, wie Behälter, Apparate, Kanäle, Gehäuse oder Kolonnen, benötigt, die entweder aus Metall, gegebenenfalls mit einer nur bedingt beständigen Beschichtung versehen sind oder aus Kunststoff oder GFK bestehen. Die hierbei verwendeten Materialien sind in der Regel nicht säurebeständig oder unrein, sodass eine zusätzliche säure- oder laugenbeständige Auskleidung der Behälter erforderlich ist. Ferner wird eine Auskleidung dort erforderlich, wo mit korrosiven Gasen oder flüssigen Substanzen gearbeitet wird und die Gehäuseinnenwandungen diesen Gasen beziehungsweise Flüssigkeiten ausgesetzt sind. Darüber hinaus sind Auskleidungsmaterialien für hochreine Behälter (Semiconductor) und für hochbeständige Behälter (Chemie) sowie für Kolonnen und andere Apparate (Chemie) notwendig. Zum Korrosionsschutz der tragenden Konstruktion und insbesondere den Wänden werden die den Strömungsbereichen zugewandten Innenflächen daher mit Korrosionsschutzfolien (Auskleidungsmaterial) aus Kunststoff verkleidet. Hierbei gelangt insbesondere der Kunststoff MFA, PFA oder FEP in Folienform zur Anwendung, weil dieser Kunststoff einen ausreichenden Korrosionsschutz bietet. Ferner kommen Kunststoffmaterialien infrage, welche zu Folien verarbeitet werden können und eine ausreichende chemische Resistenz aufweisen.

Damit ein umfassender Korrosionsschutz der tragenden Konstruktion gewährleistet ist, werden diese mit Auskleidungsmaterialien, vorzugsweise Kunststoffbahnen, vollflächig ausgekleidet, wobei die Auskleidungsmaterialien über eine Vielzahl von Befestigungs- oder Fixpunkten punktuell an der Wandinnenfläche der tragenden Konstruktion gehalten werden. Die erforderlichen Befestigungs- oder Fixpunkte sind hierbei an der Innenwand der tragenden Konstruktion befestigt und werden zur Aufhängung genutzt, wobei üblicherweise pro m² nur wenige Befestigungspunkte vorgesehen sind. Die Befestigungs- oder Fixpunkte bestehen nach dem bekannten Stand der Technik aus Schraubbolzen oder ähnlichen Metallteilen, welche mit der Gehäuseinnenwandung verbunden und zur Festlegung der Auskteidungsmaterialien unter Verwendung weiterer Hilfsmittel vorgesehen sind. Beispielsweise können die Befestigungs- oder Fixpunkte aus Metall mit einer metallischen Gehäuseinnenwandung verschraubt, verklebt oder verschweißt werden.

Die zur Befestigung vorgesehenen Auskleidungsmaterialien müssen dauerhaft mit der Wandinnenfläche der tragenden Konstruktion verbunden werden, insbesondere deshalb, weil aufgrund von Druckschwankungen der flüssigen oder gasförmigen Medien, welche beispielsweise in die tragende Konstruktion eingelassen werden, und den hierdurch entstehenden mechanischen Beanspruchungen eine ausreichende Haltekraft erforderlich ist.

Trotz der vorhandenen Behälterauskleidungen können bei besonders kritischen Chemikalien Probleme entstehen, weil der erforderliche Schutz vor Korrosion der tragenden Konstruktion, welche beispielsweise aus Metall bestehen kann, durch das Auskleidungsmaterial nicht immer gewährleistet ist. Die verwendeten Flurkunststoffmaterialien sind zumindest im geringen Umfang für bestimmte Stoffe durchlässig (permeabel). Beispielsweise kann eine besonders starke Permeation bei halogenen Wasserstoffen, zum Beispiel bei Chlorwasserstoff, der mit dem permeierenden Wasserdampf die besonders aggressive Salzsäure bilden kann, entstehen, wobei diese Stoffe in der Gasphase das Auskleidungsmaterial als Permeat durchdringen und hinter dem Auskleidungsmaterial kondensieren können, sodass beispielsweise aus Chlorwasserstoff und Wasser Salzsäure entsteht. Wasserstoff und Helium können dieses Auskleidungsmaterial ebenfalls sehr leicht passieren, verursachen als nicht kondensierbare und nicht korrosive Stoffe aber keine Korrosion. Dieser Vorgang wird insbesondere durch die entstehenden Temperaturen unterstützt, sodass ein vorrangiges Ziel darin besteht eine gute Isolierung zu finden. Die Temperatur wird hierbei von der Art und Zusammensetzung des Permeats bestimmt und muss immer so hoch sein, dass das Permat auf keinen Fall zwischen Auskleidungsmaterial und tragender Konstruktion kondensieren kann. Die Taupunkttemperatur der betreffenden Chemikalien darf insofern erst innerhalb der Isolierung unterschritten werden. Des Weiteren ist darauf zu achten, das möglichst keine Kältebrücken entstehen, um eine Kondensatbildung zu vermeiden.

Aus der DE 10 2007 026 733 A1 ist eine Kopfplatte mit einem Befestigungsbolzen und einer Unterlegscheibe bekannt, wobei die Kopfplatte zur Befestigung von Dämmstoffen und Abdichtbahnen auf Flachdächern verwendet wird. Wenngleich eine derartige Lösung für Flachdächer ausreichend ist, kommt diese Befestigungseinrichtung für Auskleidungsmaterialien nicht infrage, da die auszukleidenden Behälter mit korrosiven Medien befüllt werden, die offenliegende Schraubbolzen sofort angreifen würden.

Der vorliegenden Erfindung liegt daher die Aufgabe zugrunde eine Befestigungseinrichtung für Auskleidungsmaterialien aufzuzeigen, welche eine deutlich erhöhte Lebensdauer der verwendeten Befestigungselemente besitzt und insbesondere ein Schutz vor Korrosion bietet.

Erfindungsgemäß ist zur Lösung des Verfahrens vorgesehen, dass die Befestigungselemente aus einem Halteelement, welches mit dem Auskleidungsmaterial verbindbar ist, und einem Andruckelement, welches mit der Wandinnenfläche verbunden ist, bestehen, wobei das Halteelement und das Andruckelement kraft- und/oder formschlüssig miteinander verbunden sind. Weitere vorteilhafte Ausgestaltungen der Erfindung ergeben sich aus den Unteransprüchen.

Um den erhöhten Anforderungen mechanischer Belastungen im Bereich der Befestigungspunkte gerecht zu werden, sieht die Erfindung mehrteilige Befestigungselemente vor. Das Andruckelement wird hierbei dazu verwendet die vorgesehenen Halteelemente kraft- und/oder formschlüssig festzulegen, sodass an die Halteelemente das Auskleidungsmaterial vorzugsweise angeschweißt werden kann, während hingegen mit Hilfe des Andruckelementes eine kraftschlüssige Verbindung zur Wandinnenfläche gewährleistet ist. Durch besondere Ausgestaltung der Halteelemente und der Andruckelemente wird hierbei sichergestellt, dass die verschweißten Auskleidungsmaterialien auch bei mechanischer Beanspruchung sicher gehalten werden.

Die vorliegende Erfindung sieht hierbei verschiedene Möglichkeiten zur Ausbildung der Befestigungseinrichtungen vor, die nachstehend näher erläutert werden, wobei es bei der Art der verwendeten Befestigungselemente darauf ankommt, ob eine Befestigung des Auskleidungsmaterials im horizontalen Bodenbereich, im vertikalen Wandbereich oder horizontalen Deckenbereich erforderlich ist. Soweit eine gleichmäßige Lastverteilung vorliegt reicht es in der Regel aus, wenn mit Hilfe der Befestigungselemente das Auskleidungsmaterial ausreichend fixiert ist, während hingegen in kritischen Bereichen weitere Maßnahmen erforderlich sind, damit die Auskleidungsmaterialien zusätzlich auch im Falle von auftretenden Spannungen sicher gehalten werden. Mechanische Spannungen können beispielsweise dadurch entstehen, dass die gasförmigen oder flüssigen Medien, welche in die tragende Konstruktion eingefüllt werden, großen Druckschwankungen ausgesetzt sind und somit infolge eines Unterdruckes das Auskleidungsmaterial mechanisch beansprucht wird. Beispielsweise könnte bei unsachgemäßer Befestigung des Auskleidungsmaterials aufgrund der Fließeigenschaften der verwendeten Kunststoffmaterialien eine Materialdehnung mit einer Reduzierung der Dicke eintreten und somit eine sichere Befestigung auf Dauer nicht mehr gewährleistet sein. Mit Hilfe der erfindungsgemäßen Befestigungseinrichtung wird demgegenüber sichergestellt, dass das Auskleidungsmaterial mit Hilfe der Befestigungselemente und insbesondere im Bereich der Befestigungspunkte auch bei höherer mechanischer Beanspruchung sicher gehalten wird.

Vorzugsweise werden die Befestigungselemente über einen Befestigungsbolzen, Befestigungsnocken oder Befestigungsschienen mit der Wandinnenfläche verbunden, wobei die Befestigungselemente in der Regel mit der tragenden Konstruktion verschweißt werden. Die Befestigungselemente dienen im Weiteren dazu mit Hilfe mindestens eines Andruckelementes die Halteelemente zu fixieren und somit ein Anschweißen des Auskleidungsmaterials zu ermöglichen. Als Halteelemente wird vorzugsweise eine Kunststoffscheibe verwendet, während hingegen als Andruckelement eine Metallscheibe zum Einsatz kommt, welche aufeinander liegend zur Befestigung an der Wandinnenfläche vorgesehen sind. Die Kunststoffscheibe, in der Regel handelt es sich um einen artverwandten Kunststoff wie das Auskleidungsmaterial, dient hierbei dazu mit Hilfe von elektromagnetischer Strahlung eine Verschweißung des Auskleidungsmaterials mit der Kunststoffscheibe herbeizuführen, während demgegenüber die Metallscheibe dazu dient, die Kunststoffscheibe kraft- und formschlüssig mit der Wandinnenfläche der tragenden Konstruktion zu verbinden. Zu diesem Zweck kommt die Kunststoffscheibe beispielsweise mit einer eben ausgebildeten Fläche an der Wandinnenfläche zu liegen, während eine oder mehrere konzentrisch angeordnete erhöhte Kontaktflächen ausgebildet sind, welche eine Verschweißung mit dem Auskleidungsmaterial ermöglichen. Hierbei sind die Kontaktflächen parallel zur Wandinnenfläche ausgerichtet, sodass mit einem entsprechenden Abstand eine Anbringung der Auskleidungsmaterialien an der Wandinnenfläche ermöglicht wird. Vorzugsweise bestehen die Kontaktflächen zumindest aus einem äußeren Kreisringsegment und gegebenenfalls einem inneren Kreisringsegment oder mehreren ringförmig angeordneten Erhebungen, welche vorzugsweise rund aber ebenso gut eckig ausgebildet sein können. Die Erhebungen durchgreifen im Weiteren die Metallscheibe und stehen somit ebenfalls zum Verschweißen mit dem Auskleidungsmaterial zur Verfügung. Als besonderer Vorteil ist hervorzuheben, dass mit Hilfe der Erhebungen, welche durch die entsprechenden Durchbrüche der Metallscheibe hindurchgreifen zusätzlich eine formschlüssige Kraftübertragung als Verdrehschutz der Befestigungselemente erzielt wird.

Soweit die Erhebungen nicht zum Verschweißen mit dem Auskleidungsmaterial vorgesehen sind, können diese gegenüber dem äußeren Kreisringsegment zurückliegend ausgeführt sein oder gegebenenfalls vollständig durch die Metallscheibe abgedeckt werden, sodass lediglich eine Verschweißung mit dem äußeren Kreisringsegment der Kunststoffscheibe und dem Auskleidungsmaterial möglich ist.

In besonderer Ausgestaltung der Erfindung ist für permeierende Medien ferner vorgesehen, dass die Kunststoffscheibe zusätzlich zu den vorhandenen Einschnitten zumindest eine oder mehrere radial verlaufende rinnenförmige Vertiefungen aufweist. Die Vertiefungen dienen hierbei dazu, dass im Falle eines Durchtritts von aggressiven Medien durch das Auskleidungsmaterial, welche somit in den Zwischenraum zwischen dem Auskleidungsmaterial und der Wandinnenfläche gelangen, eine Spülung des Hohlraumes, insbesondere im Bereich der Befestigungspunkte ermöglicht wird. Durch die ringförmigen Vertiefungen wird zunächst eine Spülung des hinteren Bereiches des Befestigungspunktes, und zwar der Kunststoffscheibe ermöglicht, darüber hinaus ist in weiterer Ausgestaltung der Erfindung vorgesehen, dass die Metallscheiben zusätzliche korrespondierende Durchbrüche zu den radial verlaufenden Vertiefungen aufweisen, sodass ebenfalls eine Spülung oberhalb der Kunststoffscheibe erfolgen kann.

Damit die Metallscheibe kraft- und formschlüssig auf die Kunststoffscheibe aufgesetzt werden kann, besitzt diese zumindest eine innere ringförmige Nut oder mehrere korrespondierende Durchbrüche zu den Erhebungen der Kunststoffscheibe. Die innere ringförmige Nut korrespondiert hierbei zu einer ringförmigen Erhebung der Kunststoffscheibe, sodass seitliche Zugkräfte auf die Auskleidungsmaterialien zusätzlich aufgefangen werden können. Soweit die Kunststoffscheibe mit Erhebungen ausgestattet ist, welche beispielsweise ringförmig angeordnet sind, kann die Metallscheibe korrespondierende Durchbrüche zu den Erhebungen der Kunststoffscheibe aufweisen, sodass zusätzlich ein Verdrehschutz des Befestigungspunktes vorliegt.

Die verschiedenen Ausgestaltungen der Metall- und Kunststoffscheiben können mit Hilfe eines Schraubbolzens oder angeschweißter Gewindebolzen auf der Wandinnenfläche durch beispielsweise eine Mutter befestigt werden, wobei durch den erzielten Anpressdruck ein sicherer Halt der Kunststoffscheibe und der hierbei verwendeten Metallscheibe als Andruckscheibe erzielt wird. Nach erfolgter Montage der Befestigungspunkte wird das Auskleidungsmaterial mit der Kunststoffscheibe zumindest im Bereich des äußeren Kreisringsegmentes verschweißt.

Eine alternative Lösung der Erfindung sieht vor, dass das Auskleidungsmaterial mit einem Kunststoffring aus PFA-, MFA- oder FEP verschweißbar ist, welcher durch einen Metallring abgedeckt mit der Wandinnenfläche mit Hilfe eines Gewindebolzens verschraubbar ist, wobei über den Gewindebolzen und dem Kunststoffring sowie dem Metallring eine haubenförmige Abdeckung angeordnet und mit dem Auskleidungsmaterial ebenfalls verschweißt wird. Der hierbei zum Einsatz kommende Kunststoffring dient zur Verstärkung des Auskleidungsmaterials nachdem die Auskleidungsmaterialien im Bereich der Befestigungspunkte gelocht wurden, um beispielsweise ein Einreißen der Auskleidungsmaterialien zu verhindern. Nach erfolgter Verschweißung des Auskleidungsmaterials mit dem Ring wird dieser mit Hilfe des Metallringes, einem Gewindebolzen und einer Mutter mit der Wandinnenfläche verschraubt, wobei der hierbei erzielbare Anpressdruck den Ring und das darunter befindliche Auskleidungsmaterial gegen die Wandinnenfläche drückt. Dadurch, dass der Gewindebolzen bei einer derartigen Lösung nach innen hervorstehend aus dem Auskleidungsmaterial herausragt, ist die haubenförmige Abdeckung vorgesehen, welche unmittelbar über dem Gewindebolzen, dem Ring und gegenüber der Andruckscheibe, welche metallisch ausgebildet ist, angeordnet wird, wobei ebenfalls eine Verschweißung mit dem Auskleidungsmaterial erfolgt, sodass der Bereich der Befestigungspunkte vor den aggressiven Medien geschützt ist.

In weiterer besonderer Ausgestaltung, insbesondere im Bereich erhöhter mechanischer Beanspruchung, beispielsweise im vertikalen Wandbereich, wird das Auskleidungsmaterial im Bereich der Befestigungsbolzen mit einer Lochung versehen, sodass das Auskleidungsmaterial auf den Befestigungsbolzen aufschiebbar ist. Zusätzlich werden die Auskleidungsmaterialien im Bereich der Lochung durch einen Kunststoffring verstärkt, welcher mit dem Auskleidungsmaterial verschweißt wird. Somit liegt eine gegenüber dem Auskleidungsmaterial vorliegende Erhebung im Bereich der Lochung und damit im Bereich der Befestigungspunkte vor, welche im Weiteren eine form- und/oder kraftschlüssige Verbindung mit der Wandinnenfläche ermöglicht. Zu diesem Zweck besitzt der Metallring als Andruckelement oberhalb des Auskleidungsmaterials und des Kunststoffringes eine an die Größe des Kunststoffringes angepasste Ausdrehung, wodurch der Metallring zusätzlich den Kunststoffring umgreift und damit ein Ausreißen des Auskleidungsmaterials im Bereich der Lochung und des Befestigungspunktes verhindert.

In weiterer Ausgestaltung der Erfindung ist vorgesehen, dass zwischen dem Auskleidungsmaterial und der Abdeckung oder dem Kunststoffring und ebenso bei der Ausführungsvariante mit einer unmittelbaren Verschweißung zwischen dem Kunststoffring und dem Auskleidungsmaterial eine elektromagnetische Strahlung absorbierende Zwischenlage angeordnet ist. Die Zwischenlage absorbiert elektromagnetische Strahlung bestimmter Wellenlänge und ist hierzu an die verwendeten Schweißgeräte entsprechend angepasst ausgeführt. Zum Einsatz kommen als elektromagnetische Strahlungsquelle vorzugsweise Festkörperlaser, Gaslaser, Halbleiterlaser oder eine Infrarotquelle, beispielsweise eine Xenon-Kurzbogenlampe oder es werden CO₂-Laser eingesetzt.

In weiterer besonderer Ausgestaltung der Erfindung ist vorgesehen, dass die Befestigungselemente aus zumindest zwei Kreisringsegmenten als Andruckelemente bestehen, welche auf einem Befestigungsnocken mit Hilfe von Verbindungsmitteln, beispielsweise Stiften, Stiftschrauben oder Bolzen, festlegbar sind und eine zweiteilige Kunststoffscheibe als Haltemittel festlegen. Diese Art der Befestigung wird vorzugsweise dort vorgesehen, wo die tragende Konstruktion über Befestigungsnocken an der Wandinnenfläche verfügt. Die Befestigungsnocken können hierbei ebenso wie die Wandinnenfläche mit einer zusätzlichen Beschichtung versehen sein, wobei durch die Ausgestaltung der Befestigungsnocken und der Verwendung zweier Kreisringsegmente als Andruckelemente sowie zweier weiterer Kreisringsegmente als Haltemittel aus Kunststoff eine Beschädigung der Oberfläche der Wandinnenfläche weitestgehend verhindert werden kann. Besonders vorteilhaft bei dieser Ausgestaltung ist, dass die Wandinnenfläche bereits eine vollflächige Beschichtung aufweist, welche durch beispielsweise Schraubbolzen nicht mehr zerstört zu werden braucht. Die Befestigungsnocken ermöglichen hierbei durch Hinterlegen der Andruckelemente und Haltemittel ein Hintergreifen des Befestigungsnockens, sodass eine sichere und dauerhafte Haltbarkeit der Befestigungselemente gewährleistet ist. Die beiden Kreisringsegmente für das Haltemittel werden hierbei als erstes um den Befestigungsnocken herumgelegt und anschließend das zweiteilige Andruckelement in der Weise aufgesetzt, dass die Schnittlinien der beiden Kreisringsegmente zumindest um 90° Grad gegenüber den Halteelementen versetzt angeordnet sind. Zur Absicherung der Lageposition weisen die Andruckelemente rasterförmige Vertiefungen auf, in welche hervorspringende Kunststoffnoppen der Haltemittel eingreifen. Eine Befestigung der Andruckelemente erfolgt über Stifte, Stiftschrauben oder Bolzen, sodass die beiden Kreisringsegmente kraft- und formschlüssig mit den Befestigungsnocken verbunden werden können, wobei zwischen Befestigungsnocken und Andruckelementen ein elastisches Folienmaterial angeordnet werden kann, um eine Beschädigung durch Reibung zu vermeiden. Als weitere Maßnahme besteht die Möglichkeit zusätzlich eine Kunststofffolie unter die Halteelemente zu schieben, um den Kraft- und Formschluss zu erhöhen und darüber hinaus eventuelle Höhenunterschiede zwischen den Befestigungsnocken und der zurückspringenden Wandinnenfläche auszugleichen, wobei die untergeschobenen Kunststofffolien gegebenenfalls mit dem Halteelement zusätzlich verschweißt werden können. Diese Art der Befestigung ist besonders vorteilhaft, wenn beispielsweise die tragende Konstruktion eine innere Beschichtung aus einem 2- Komponentenmaterial, aus Emaille, aus Phenolharz, einer Einbrennlackierung, eine Gummibeschichtung oder eine Flammenspritzbeschichtung aufweist. Die hierbei verwendeten Befestigungselemente beschädigen diese bereits vorhandene Beschichtung nicht mehr und gewährleisten trotzdem einen sicheren Kraftund Formschluss mit der Wandinnenfläche. Nach Festlegung der Befestigungselemente kann in gewohnter Weise das Auskleidungsmaterial mit den Haltemitteln verschweißt werden, wobei vorzugsweise eine mit Hilfe von elektromagnetischer Strahlung vorgenommene Verschweißung erfolgt. Die erforderliche Krafteinleitung zwischen den Kreisringsegmenten der Andruckelemente und den Kreisringsegmenten der Haltemittel erfolgt hierbei über die korrespondierenden Vorsprünge beziehungsweise Ausnehmungen und sichern gleichzeitig einen Verdrehschutz der beiden verwendeten Andruckelemente und der beiden Haltemittel gegeneinander zu. Die hierbei verwendeten Haltemittel in Form der Kunststoffscheiben besitzen ebenfalls eine Kontaktfläche zur Verschweißung mit dem Auskleidungsmaterial und ermöglichen somit eine rationelle Arbeitsweise beim Anbringen des Auskleidungsmaterials.

In weiterer alternativer Ausgestaltung der Erfindung ist vorgesehen, dass die Befestigungselemente aus zumindest zwei Kreisringsegmenten als Halteelemente und zumindest aus zwei Spannringen als Andruckelemente bestehen, welche mittels Formschluss auf einem Befestigungsnocken in Radialrichtung festlegbar sind. Die Festlegung erfolgt hierbei wie in dem zuvor genannten Beispiel durch Anlegen der beiden Halteelemente und anschließendes auflegen der beiden Andruckelemente, wobei diese zusätzlich durch einen umhüllenden Außenring verspannt werden können. Mit Hilfe des aufgeschobenen Außenringes wird hierbei ein Auseinandergleiten der zweiteiligen Andruckelemente und ebenso der zweiteiligen Halteelemente verhindert. Gleichzeitig besteht zwischen den Halteelementen und den Andruckelementen ein Formschluss, wodurch ein Kippen der Kunststoffscheiben aus der Befestigungsebene heraus vermieden werden kann. Zur Absicherung dient der einteilige umhüllende Außenring, welcher auf die Andruckelemente zusätzlich aufgeschoben werden kann und somit ebenfalls einen Kraft- und Formschluss hervorruft. Zusätzlich kann bei dieser Ausführungsvariante der umhüllende Außenring aus Metall oder Kunststoff mit der Wandinnenfläche verschweißt werden, beispielsweise, wenn es sich um eine tragende Konstruktion aus Metall oder Kunststoff handelt.

In weiterer besonderer Ausgestaltung der Erfindung ist vorgesehen, dass die Befestigungselemente ein weiteres Dichtungselement aufweisen, welches vorzugsweise auf den Befestigungsbolzen aufgeschoben und mit Hilfe eines Klemmringes verpresst wird. Zusätzlich erfolgt eine Verschweißung des Klemmringes mit einem Auskleidungsmaterial, sodass ein nachträgliches Lösen verhindert werden kann. Eine derartige Konstruktion sieht vor, dass das Dichtungselement unmittelbar auf der Wandinnenfläche zu liegen kommt, und zwar um den Befestigungsbolzen herum, sodass mit Hilfe des Klemmringes und dem durch die weiteren Befestigungselemente aufgebrachten Anpressdruck eine sichere Befestigung der Auskleidungsmaterialien gewährleistet ist. Bei dieser Ausgestaltung besteht darüber hinaus die Möglichkeit dass ein erstes Auskleidungsmaterial unmittelbar auf den Klemmring aufliegt und in beabstandeter Form ein zweites Auskleidungsmaterial, welches mit Hilfe eines aus Kunststoff bestehenden Halteelementes verschweißt ist, wobei das Halteelement wiederum mittels einer metallischen Scheibe auf den Befestigungsbolzen festlegbar ist. Vorzugsweise kann bei einer der vorgenannten Lösungen der Metallring selbst ein Innengewinde aufweisen, sodass der Metallring auf den Befestigungsbolzen aufgedreht und somit verspannt werden kann, um den notwendigen Anpressdruck für das Dichtungselement aufzubringen.

Sämtliche der vorgenannten Ausführungsvarianten können hierbei vorsehen, dass zwischen dem Auskleidungsmaterial und einer möglichen Abdeckung beziehungsweise dem verwendeten Kunststoffring eine elektromagnetische Strahlung absorbierende Zwischenlage angeordnet ist, wodurch eine nachträgliche Verschweißung der verschiedenen Kunststoffelemente mit Hilfe von elektromagnetischer Strahlung ermöglicht wird.

In einer weiteren besonderen Ausgestaltung der Erfindung ist vorgesehen, dass die Befestigungsnocken nicht rund, sondern an ihrem freien Ende stabförmig ausgebildet und einstückig mit der Wand innenfläche verbunden sind. Auf die stabförmigen Befestigungsnocken kann im Weiteren ein Halteelement und ein Andruckelement mit einer korrespondierenden Schlitzführung aufgeschoben werden, wobei nach einer 90° Grad Verdrehung des Andruckelementes ein Kraft- und Formschluss mit den Befestigungsnocken herstellbar ist. Zur Vermeidung eines späteren Lösens von Andruckelement und Halteelement besteht zusätzlich ein Formschluss durch Nocken des Halteelementes und korrespondierenden Ausnehmungen des Andruckelementes. Die hervorspringenden Nocken des Halteelementes greifen nach Verdrehung des Andruckelementes um cirka 90° Grad in die vorhandenen Ausnehmungen ein und ermöglichen somit einen Verdrehschutz, wobei bei dieser Lösung ohne großen Aufwand eine schnelle Montage der einzelnen Befestigungselemente gegeben ist. Nach Festlegung der Befestigungselemente kann im Anschluss daran das Auskleidungsmaterial unmittelbar mit der Kunststoffscheibe, das heißt mit dem Halteelement verschweißt werden. Der besondere Vorteil bei dieser Lösung besteht ebenso wie bei den vorgenannten Lösungen darin, dass die Befestigungsnocken jeglicher Gestalt beschichtet ausgeführt sein können und insbesondere mit einem Kunststoff-, Keramik- oder Emaillieüberzug versehen sind, sodass die Wandinnenfläche der tragenden Konstruktion eine erste Schutzschicht gegenüber den aggressiven Medien aufweist und zudem mit Hilfe des Auskleidungsmaterials eine weitere Schutzschicht aufgebracht werden kann. Der besondere Vorteil dieser Lösung besteht ferner darin, dass zwischen der tragenden Konstruktion und gegebenenfalls der vorhandenen Beschichtung sowie dem Auskleidungsmaterial ein Zwischenraum entsteht, der durch geeignete Zwangsentlüftungen eine erhöhte Ansammlung von schädlichen Stoffen verhindert. Dies bedeutet, soweit durch das Auskleidungsmaterial infolge der Permeation zum Beispiel HCL und Wasserstoff in den Zwischenraum gelangt und bei entsprechenden Temperaturen Salzsäure entstehen lässt, kann diese abgesaugt werden, um Schäden an der tragende Konstruktion und den Befestigungsbolzen zu vermeiden. Darüber hinaus kann die Salzsäure oder andere schädliche Gase oder Flüssigkeiten durch Hinterlüften und Absaugen insoweit reduziert werden, dass eine erhebliche Verminderung der Korrosion eintritt.

In weiterer besonderer Ausgestaltung besteht die Befestigungseinrichtung aus einem Befestigungsnocken, auf den das gelochte Auskleidungsmaterial aufgeschoben werden kann. Im Anschluss wird eine geschlitzte oder geteilte Kunststoffscheibe entsprechender Stabilität und Dicke auf den verjüngenden Teil des Befestigungsnocken aufgeschoben, sodass ein Kraft- und Formschluss entsteht und das Auskleidungsmaterial auf die Wandinnenfläche gepresst wird. Danach kann mittels einer haubenförmigen Abdeckung eine zusätzliche Abdichtung der Befestigungseinrichtung erfolgen, wobei über die Abdeckung gleichzeitig infolge einer Verschweißung mit der Kunststoffscheibe eine Arretierung erzielt wird und ein Abrutschen der Kunststoffscheibe von dem Befestigungsnocken ausgeschlossen werden kann. Diese Befestigungseinrichtung kann sowohl für beschichtete als auch für nicht beschichtete Befestigungsnocken verwendet werden.

Die Befestigungsnocken können trapezförmig, T-förmig, pilzförmig oder dreieckförmig ausgebildet sein und in speziellen Fällen, beispielsweise für eine der vorgenannten Befestigungselemente endseitig stabförmig ausgebildet sein, sodass die hierfür vorgesehenen Befestigungselemente, wie Halteelemente und Andruckelemente, mit Hilfe der vorhandenen korrespondierenden Schlitzführung aufgesetzt und nach Verdrehung um cirka 90° Grad auf der Wandinnenfläche verspannt werden können.

Für die Auskleidungsmaterialien, Kunststoffringe, Abdeckung oder Abdeckkappen werden hauptsächlich hochfluorierte Thermoplaste, vorzugsweise FEP, MFA, PFA oder modifiziertes PTFE verwendet, wobei die absorbierende Beschichtung der Zwischenlage aus gleichen angereicherten Kunststoffmaterialien bestehen kann, da mit Hilfe der elektromagnetischen Strahlung eine Verschweißung erfolgen soll.

Die Erfindung wird im Weiteren anhand der Figuren nochmals beschrieben.

Es zeigt
- Fig. 1: in einer Draufsicht und einer geschnittenen Seitenansicht eine erfindungsgemäße Kunststoffscheibe und Metallscheibe zur Verwendung bei einem Befestigungspunkt sowie in zwei vergrößerten geschnittenen Darstellungen den Schweißbereich des Auskleidungsmaterials,
- Fig. 2: in einer Draufsicht und einer geschnittenen Seitenansicht eine weitere Ausführungsform der Kunststoffscheibe sowie in einer vergrößerten Darstellung einen Schnitt gemäß der Schnittlinie A-A und in einer Draufsicht eine zugehörige Metallscheibe,
- Fig. 3: in einer geschnittenen Seitenansicht eine weitere Ausführungsvariante zur Befestigung eines Auskleidungsmaterial mit Hilfe einer Kunststoffscheibe und einer Metallscheibe gemäß Figur 3,
- Fig. 4: in einer geschnittenen Seitenansicht eine weitere Ausführungsvariante gemäß Figur 3 mit einer zusätzlichen Zentrierung der Kunststoffscheibe,
- Fig. 5: in einer geschnittenen Seitenansicht eine weitere Ausgestaltung der Befestigungselemente, bestehend aus einer Kunststoffscheibe und Metallscheibe und einer hierüber angeordneten Abdeckung,
- Fig. 6: in einer geschnittenen Seitenansicht einen Befestigungsnocken mit einem darauf angeordneten zweiteiligen Halte- und Andruckelement,
- Fig. 7: in einer geschnittenen Seitenansicht drei mögliche Gestaltungen der Befestigungsnocken gemäß Figur 6,
- Fig. 8: in einer geschnittenen Seitenansicht eine weitere Ausführungsvariante mit einem im Querschnitt T-förmigen Befestigungsnocken und geteilten Halte- sowie Andruckelementen, welche durch einen Außenring zusätzlich fixiert sind,
- Fig. 9: in einer geschnittenen Seitenansicht eine besondere Ausgestaltung mit einer zusätzlichen Abdichtungsmaßnahme gegenüber dem Befestigungsbolzen und der Wandinnenfläche,
- Fig. 10: in einer geschnittenen Seitenansicht und einer Draufsicht eine weitere Lösungsvariante bei der die einteiligen Halte- und Andruckelemente auf einen einstückig angeformten Nocken aufgesetzt werden, welche an seinem hervorstehenden Ende stabförmig ausgebildet ist und
- Fig. 11: in einer geschnittenen Seitenansicht eine weitere Ausführungsvariante bei der das Auskleidungsmaterial mit Hilfe eines geschlitzten Kunststoffringes auf einem Befestigungsnocken fixierbar ist, welcher zusätzlich durch eine Abdeckung geschützt wird.

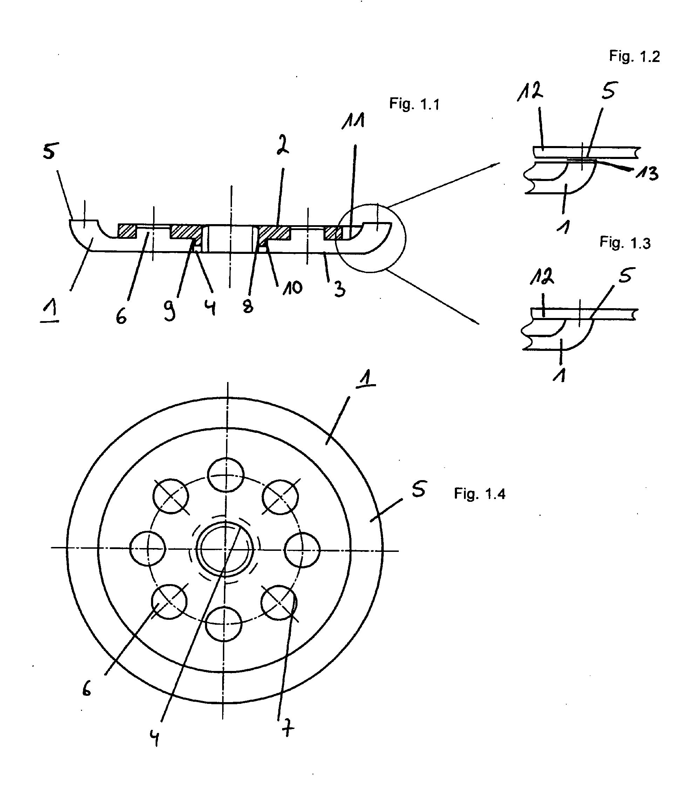

Die Figuren 1.1 bis 1.4 zeigen in einer Draufsicht und einer geschnittenen Seitenansicht die beiden für einen Befestigungspunkt vorgesehenen Einzelteile, und zwar eine Kunststoffscheibe 1 und eine Metallscheibe 2. Die Kunststoffscheibe 1 weist eine ebene Rückwand 3 auf, welche unmittelbar auf einer nicht dargestellten Wandinnenfläche eines Behälters, Apparates, Kanals oder eines Gehäuses zu liegen kommt. Über eine zentrale Bohrung 4 besteht die Möglichkeit die Kunststoffscheibe mit der Wandinnenfläche zu verschrauben, wobei in der Regel ein Schraubbolzen verwendet wird, welcher zuvor mit der Wandinnenfläche, beispielsweise im Falle von Metall, verschweißt wurde. Zunächst wird auf diesen Schraubbolzen die Kunststoffscheibe 1 aufgeschoben und danach ein Metallring 2, welcher einen gleichmäßigen Anpressdruck auf die Kunststoffscheibe 1 gegen die Wandinnenfläche, nach erfolgter Verschraubung, erzeugt.

Die Kunststoffscheibe 1 besitzt eine Kontaktfläche 5, die aus einem äußeren Kreisringsegment gebildet wird. Die Kontaktfläche 5 ist hierbei zum Verschweißen mit dem Auskleidungsmaterial vorgesehen. Darüber hinaus weist die Kunststoffscheibe 1 im gezeigten Ausführungsbeispiel mehrere ringförmig angeordnete Erhebungen 6 auf. Die Erhebungen 6 können hierbei ebenso zum Verschweißen mit dem Auskleidungsmaterial vorgesehen sein, können jedoch gegenüber der Kontaktfläche 5 ebenso zurückliegend angeordnet sein, sodass diese lediglich als Verdrehschutz zwischen Metallscheibe 2 und Kunststoffscheibe 1 verwendet werden.

Die zum Einsatz kommende Metallscheibe 2 besitzt zu den Erhebungen 6 korrespondierende Durchbrüche 7, durch die die Erhebungen 6 der Kunststoffscheibe 1 hindurch ragen. Ferner weist die Metallscheibe 2 eine Bohrung 8 auf, sodass die Metallscheibe 2 zusammen mit der Kunststoffscheibe 1 auf den Gewindebolzen aufgeschoben werden kann. Zur sicheren Montage ist hierbei im Weiteren ein Vorsprung 9 vorgesehen, welcher in einer Ausdrehung 10 der Kunststoffscheibe 1 zu liegen kommt und somit eine Zentrierung zwischen Metallscheibe 2 und Kunststoffscheibe 1 ermöglicht. Nach dem Zusammenfügen von Kunststoffscheibe 1 und Metallscheibe 2 kommt die Metallscheibe 2 in einer Vertiefung 11 der Kunststoffscheibe 1 zu liegen, sodass diese nahezu vollständig durch die kreisringförmige Kontaktfläche 5 zurückliegend angeordnet ist und somit lediglich eine unmittelbare Berührung des Auskleidungsmaterials mit der Kontaktfläche 5 und ggf. mit den Erhebungen 6 erfolgt.

Aus den vergrößerten und geschnittenen Teilansichten ist nochmals die Kontaktfläche 5 ersichtlich, wobei bei der oberen Teilansicht zwischen einem Auskleidungsmaterial 12 und der Kunststoffscheibe 1 eine Zwischenlage 13 eingefügt ist, welche elektromagnetische Strahlung absorbieren kann, sodass mit Hilfe elektromagnetischer Strahlung eine Erwärmung und damit eine Verschweißung zwischen der Kunststoffscheibe 1 und dem Auskleidungsmaterial 12 erfolgen kann. In der zweiten Teilansicht ist eine Ausführungsvariante gezeigt, bei der die Kunststoffscheibe 1 selbst aus einem absorbierenden Material besteht, sodass das Auskleidungsmaterial 12 unmittelbar mit Hilfe elektromagnetischer Strahlung mit der Kunststoffscheibe 1 verschweißt werden kann.

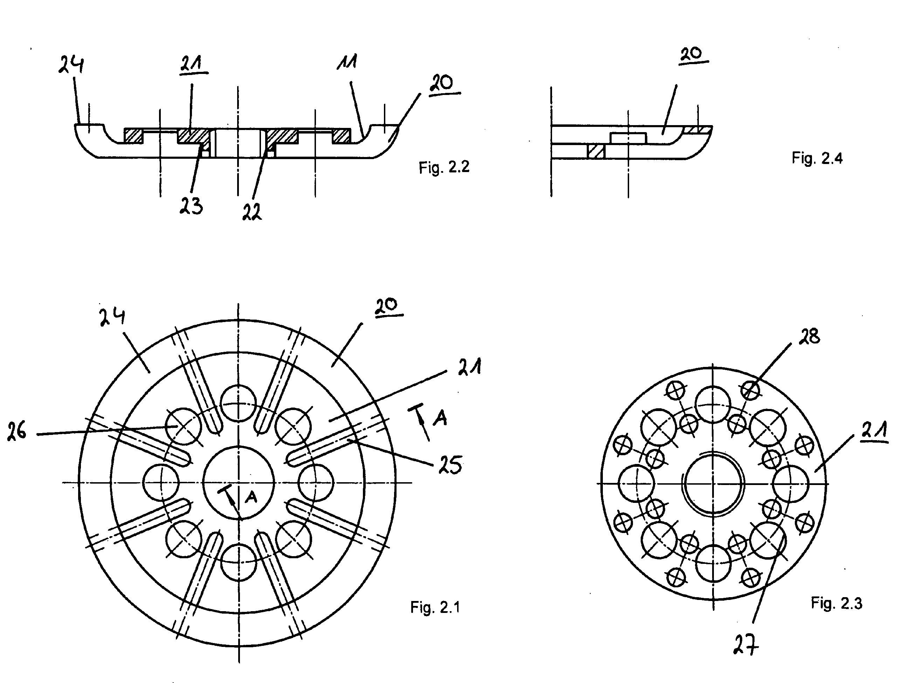

Die Figuren 2.1 bis 2.4 zeigen in einer Draufsicht und einer geschnittenen Seitenansicht eine weitere Ausführungsform einer Kunststoffscheibe 20 sowie in einer geschnittenen Teilansicht gemäß der Schnittlinie A-A und in einer weiteren Draufsicht die zur Verwendung mit der Kunststoffscheibe 20 vorgesehene Metallscheibe 21.

Wie im gezeigten Ausführungsbeispiel gemäß Figur 1 besitzt die Kunststoffscheibe 20 ebenfalls einen zentralen Durchbruch 22 mit einer radialen Erweiterung 23 und einer muldenförmigen Vertiefung 11, welche zur Aufnahme der Metallscheibe 21 vorgesehen ist. Über eine Kontaktfläche 24 erfolgt die Verschweißung mit dem Auskleidungsmaterial analog der aufgezeichneten Möglichkeiten gemäß Figur 1. Im Unterschied zur Ausführungsvariante gemäß Figur 1 besitzt die Kunststoffscheibe radial verlaufende, rinnenförmige Vertiefungen 25, die sternförmig auseinanderlaufen und eine Spülung des hinteren Bereiches der Kunststoffscheibe, im Falle eines Durchtritts von gasförmigen oder flüssigen Medien durch das Auskleidungsmaterial, ermöglicht. Ferner besitzt die Kunststoffscheibe 20 neben der Kontaktfläche 24 ringförmig angeordnet Erhebungen 26, welche korrespondierend zu den Durchbrüchen 27 der Metallscheibe 21 angeordnet sind. Die Metallscheibe 21 ist somit vergleichbar mit der Metallscheibe aus Figur 1, jedoch besitzt die Metallscheibe zusätzliche Durchbrüche 28, welche in doppelter Anordnung umfangsverteilt angeordnet sind, und zwar korrespondierend zu den rinnenförmigen Vertiefungen 25, sodass nach erfolgter Montage die Durchbrüche 28 unmittelbar über den Vertiefungen 25 zu liegen kommen. Durch diese Maßnahme ist ferner sichergestellt, dass auch eine Spülung der Kunststoffscheibe und des Metallringes im oberen Bereich, im Falle des Austritts von aggressiven Medien, gewährleistet ist.

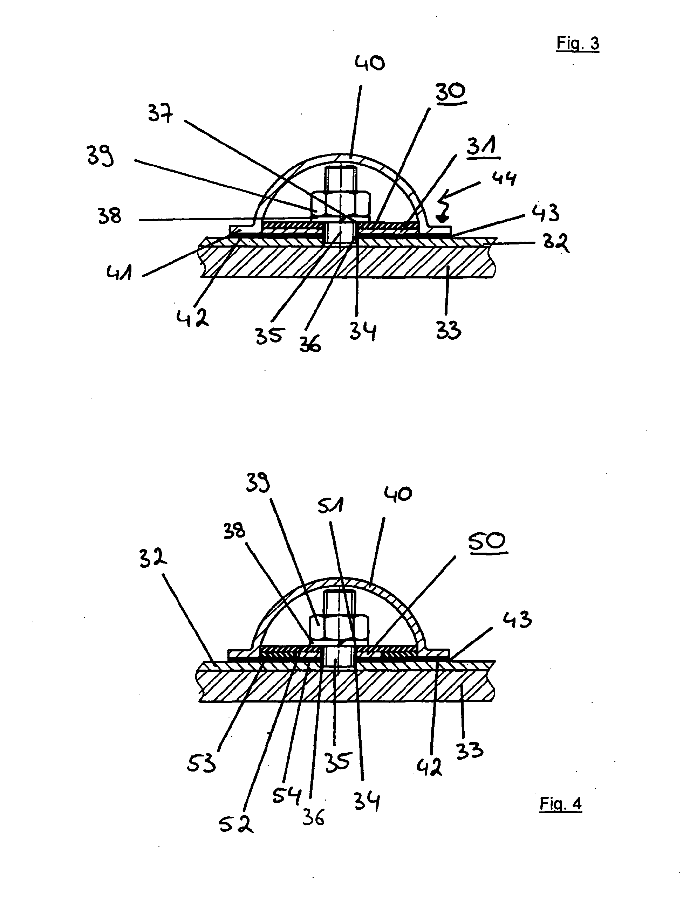

Figur 3 zeigt eine alternative Befestigungsform bei der ebenfalls eine Metallscheibe 30 und eine Kunststoffscheibe 31 verwendet werden. Gegenüber der Ausführungsvariante gemäß der Figur 1 und 2 liegt bei dieser Lösung das Auskleidungsmaterial 32 unmittelbar auf der Wandinnenfläche 33 auf und wird mit Hilfe eines Schraubbolzens 34, der Kunststoffscheibe 31 sowie der Metallscheibe 30 verpresst. Bei dieser ersten Ausgestaltung besitzt die Kunststoffscheibe 31 einen zentralen Durchbruch 36, welcher ein Aufschieben der Kunststoffscheibe 31 auf den Befestigungsbolzen 35 ermöglicht. Ferner besitzt auch die Metallscheibe 30 einen Durchbruch 37, sodass im Anschluss die Metallscheibe 30 auf den Befestigungsbolzen 35 aufgeschoben und mit Hilfe einer Unterlegscheibe 38 und einer Mutter 39 verspannt werden kann. Zum Schutz des Befestigungsbolzens 35, welcher sonst ungeschützt den aggressiven Medien ausgesetzt wäre, ist eine Abdeckung 40 vorgesehen, welche im vorliegenden Ausführungsbeispiel halbkreisförmig ausgebildet ist und randseitig eine flanschförmige Anformung 41 aufweist, welche mit ihrer Planfläche 42 auf dem Auskleidungsmaterial 32 zu liegen kommt. Zwischen dem Auskleidungsmaterial 32 und der Planfläche 42 befindet sich eine elektromagnetische Strahlung absorbierende Zwischenlage 43, sodass mit Hilfe von elektromagnetischer Strahlung 44 eine Verschweißung der Abdeckung 40 mit dem Auskleidungsmaterial 32 erfolgen kann. Durch diese Maßnahme wird der Befestigungsbolzen 35 vollständig gegenüber den aggressiven Medien abgedeckt und somit vor Korrosion geschützt. Darüber hinaus ist durch den vorgesehenen Schweißvorgang eine sichere und dauerhafte Verbindung zwischen der Abdeckung 40 und dem Auskleidungsmaterial 32 gewährleistet, wobei insbesondere durch möglicherweise auftretende Spannungen kein Abriss der Abdeckung 40 zu befürchten, da keine außen liegenden Schweißnähte ausgebildet sind und insbesondere eine flächige Verschweißung zwischen dem Auskleidungsmaterial 32 und der Planfläche 42 vorliegt.

Figur 4 zeigt in einer geschnittenen Seitenansicht eine weitergehende Lösung gemäß Figur 3. Ebenso wie bei der bereits beschriebenen Lösung wird auf einer Wandinnenfläche 33 ein Auskleidungsmaterial 32 befestigt, und zwar mit Hilfe eines Befestigungsbolzen 35, welcher durch einen Durchbruch 34 des Auskleidungsmaterials 32 hindurchragt und eine Verspannung des Auskleidungsmaterials 32 mit der Wandfläche 33 ermöglicht. Eine Verspannung erfolgt wie im bereits bekannten Ausführungsbeispiel mit Hilfe einer Mutter 39 und einer Unterlegscheibe 38, wobei bei dieser Lösung jedoch eine im Durchmesser verkleinerte Kunststoffscheibe 50 verwendet wird, die ebenfalls einen zentralen Durchbruch 51 aufweist, damit die Kunststoffscheibe 50 auf den Befestigungsbolzen 35 aufgeschoben werden kann. Oberhalb der Kunststoffscheibe 50 befindet sich eine Metallscheibe 52, die entweder einstückig ggf. auch zweistückig in einer verschweißten Form verwendet werden kann. Das besondere an der Metallscheibe 52 ist, dass diese durch ein äußeres Kreisringsegment 53 randseitig verstärkt ausgeführt ist, wobei dieses Kreisringsegment 53 die Kunststoffscheibe 50 umschließt, sodass zusätzlich neben dem Kraftschluss auch ein Formschluss des Auskleidungsmaterial 32 erzielbar ist. Insbesondere verhindert die Metallscheibe 52 ein Verrutschen oder Herausgleiten des Auskleidungsmaterials 32 und der Kunststoffscheibe 50 aus dem Bereich des Befestigungspunktes. Der Schraubbolzen 35 ist ebenso durch eine Abdeckung 40 abgedeckt, wobei diese Abdeckung 40 flächig durch eine Planfläche 42 mit dem Auskleidungsmaterial 32 verbunden ist, sodass auch nach Außen hin, wie im Ausführungsbeispiel gemäß Figur 3, keine Kerbwerkung entsteht und so zu einem möglichen Einriss des Auskleidungsmaterials 32 führt. Damit eine Verschweißung der Abdeckung 40 und dem Auskleidungsmaterial 32 erfolgen kann, wird eine Zwischenlage 43 verwendet, welche elektromagnetische Strahlung absorbiert und somit durch eine Erwärmung der Kunststoffmaterialien zu einer Verschweißung führt. Des Weiteren wird die Kunststoffscheibe 50 ebenfalls über eine Zwischenlage 54 mit dem Auskleidungsmaterial 32 verschweißt, sodass zusätzlich eine Verstärkung des Durchbruchs 34 erzielt wird.

Diese Ausführungsvariante für einen Befestigungspunkt wird vorzugsweise im vertikalen Bereich eingesetzt, dort wo erhebliche Zugspannungen auf das Auskleidungsmaterial 32 einwirken, damit ein Verrutschen des Auskleidungsmaterials 32 gegenüber der Wandinnenfläche und insbesondere ein Herausrutschen unterhalb der Befestigungspunkte verhindert werden kann. Die aufgezeigten Lösungen zur Befestigung eines Auskleidungsmaterials 32 an einer Wandinnenfläche 33 offenbaren unabhängig voneinander verschiedenen Lösungen, wobei eine Kombination der unterschiedlichen Varianten miteinander ohne weiteres denkbar ist. Es wird insbesondere eine großflächige Andruckfläche zwischen dem Auskleidungsmaterial 32 und der Wandinnenfläche 33 erzielt und darüber hinaus an den Stellen, wo es zusätzlich auf einen Verdrehschutz ankommt eine Verdrehsicherung ermöglicht oder ein Herausrutschen unterhalb der Metallscheibe 52, beispielsweise durch die zusätzlich eingeklammerte Kunststoffscheibe 50, verhindert.

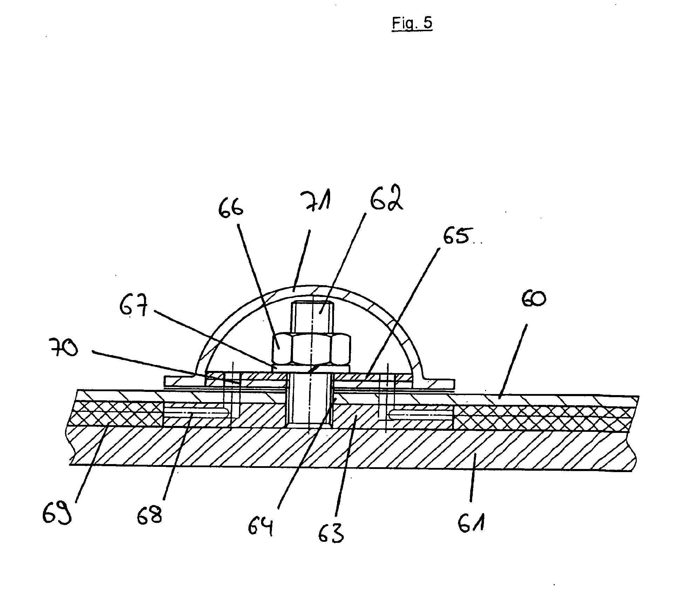

Figur 5 zeigt in einer geschnittenen Seitenansicht eine weitere Ausgestaltung einer Befestigungseinrichtung für Auskleidungsmaterialien 60, welche auf einer tragenden Konstruktion, das heißt auf einer Wandinnenfläche 61 festlegbar sind. Zur Befestigung der Auskleidungsmaterialien 60 ist ein Befestigungsbolzen 62 vorgesehen, auf dem zunächst eine Fixierscheibe 63 aufgeschoben wird und danach das Auskleidungsmaterial 60. Das Auskleidungsmaterial weist zu diesem Zweck eine Lochung 64 auf. Im Bereich des Befestigungsbolzens 62 wird des Weiteren eine Andruckscheibe 65 aufgelegt und mit Hilfe einer Mutter 66 verspannt, sodass ein Kraftund Formschluss vorliegt. Zur Absicherung der Mutter ist hierbei ein Federring 67 vorgesehen, welcher unmittelbar auf der Fixierscheibe 65 aufliegt. Die Fixierscheibe 63 besitzt einen Spülkanal 68, welcher in den Zwischenraum 69 zwischen der Wand innenfläche 61 und dem Auskleidungsmaterial 60 über eine ringförmige Nut 72 mündet. Nach erfolgter Montage des Auskleidungsmaterials 60, das heißt nach Anziehen der Mutter 66 werden im Anschluss mehrere umfangsverteilte Bohrungen 70 eingebracht, sodass eine Verbindung zu der Nut 72 und dem Spülkanal 68 entsteht. Des Weiteren wird nach Abschluss der Arbeiten eine Abdeckung 71 mit dem Auskleidungsmaterial 60 verschweißt, sodass der Innenraum der Abdeckung 71, dort wo sich der Befestigungsbolzen 62 und die Mutter 66 befindet vor den aggressiven Medien geschützt ist. Durch die vorhandene Bohrung 70, die Nut 72 und den Spülkanal 68 ist hierbei eine Spülung des Innenraums unterhalb der Abdeckung 71 gewährleistet, sodass der Bolzen aufgrund der vorhandenen Spülung auch infolge einer Permeation von aggressiven Medien vor Korrosion geschützt wird. Alternativ kann anstelle einer Mutter 66 die verwendete Andruckscheibe 65 mit einem Innengewinde versehen sein, sodass die Andruckscheibe 65 unmittelbar auf den Befestigungsbolzen 62 aufgeschraubt und verspannt werden kann. Die erforderlichen Bohrungen 70 werden bei dieser Montagemöglichkeit nachträglich, das heißt nach erfolgter Montage eingebracht, um die Verbindung zu der Nut 72 und dem Spülkanal 68 herzustellen.

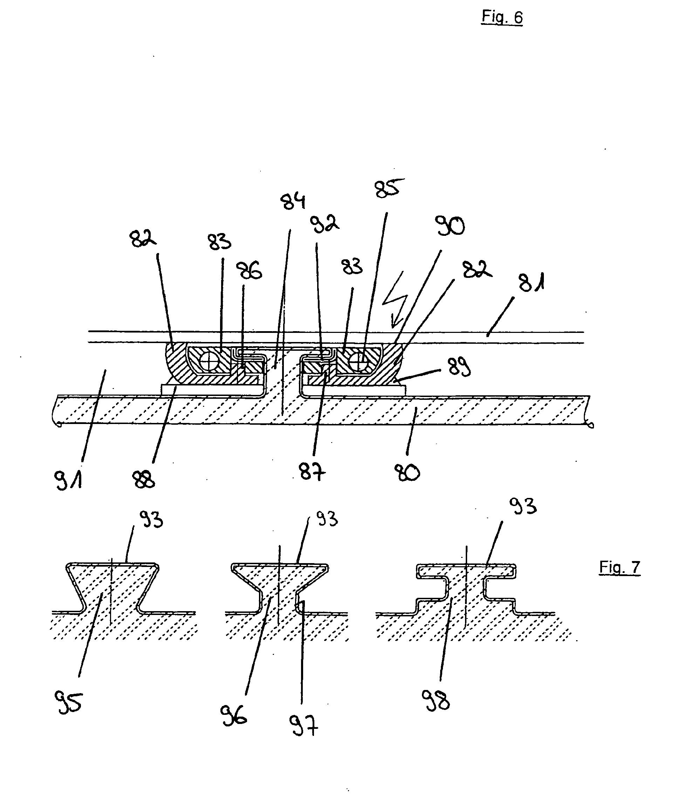

Figur 6 zeigt in einer geschnittenen Seitenansicht eine Wandinnenfläche 80 mit einem Auskleidungsmaterial 81, welches durch geeignete Befestigungsmittel mit der Wandinnenfläche 80 verbunden wird. Zur Befestigung ist in diesem Fall eine zumindest zweigeteilte Kunststoffscheibe 82 als Halteelement sowie eine zweigeteilte Andruckscheibe 83 vorgesehen, wobei letztere vorzugsweise aus Metall besteht. Zur Befestigung des Auskleidungsmaterials 81 ist ein Befestigungsnocken 84 vorgesehen, welcher einstückig mit der Wandinnenfläche 80 verbunden ist, wobei der Befestigungsnocken 84 und die Wandinnenfläche 80 mit einer vorhandenen Beschichtung 93 versehen sind. Um den Befestigungsnocken 84 wird zunächst die zweiteilige Kunststoffscheibe 82 als Halteelement gelegt und sodann die zweiteilige Andruckscheibe 83, sodass ein Formschluss mit den Befestigungsnocken 84 entsteht. Über Befestigungsstifte 85 erfolgt eine Verspannung der beiden Andruckscheiben 83, welche wiederum die Kunststoffscheiben 82 gegen die Wandinnenfläche 80 drücken. Um ein Lösen der Andruckscheibe 83 zu verhindern weisen diese mehrere umfangsverteilte Ausnehmungen 86 auf, in welche vorstehende Nocken 87 der zweiteiligen Kunststoffscheibe 82 eingreifen. Somit entsteht zwischen der Kunststoffscheibe 82 und der Andruckscheibe 83 zusätzlich ein Formschluss, welcher eine Verdrehung der Scheiben gegeneinander verhindert und somit ein Lösen von dem Befestigungsnocken 84 verhindert. Um eine weitere Verspannung an der Wandinnenfläche 80 zu erzeugen ist eine untergeschobene Kunststoffscheibe 88 vorgesehen, welche ebenfalls zweiteilig ausgeführt ist und somit unmittelbar unter den Kunststoffscheiben 82 zu liegen kommt. Die Dicke der Kunststoffscheibe 88 kann hierbei an den Abstand des Befestigungsnocken 84 und der verwendeten Kunststoffscheiben 82 angepasst werden, sodass ebenfalls ein Form- und Kraftschluss vorliegt. Die Kunststoffscheiben 88 werden über eine Schweißnaht 89 mit den Kunststoffscheiben 82 verbunden, sodass ein nachträgliches Lösen ausgeschlossen ist. Nach erfolgter Montage der Befestigungselemente und Auflegen des Auskleidungsmaterials 81 kann dieses mit der Kontaktfläche 90 der Kunststoffscheiben 82 verschweißt werden, sodass die gesamte Konstruktion vor den aggressiven Medien geschützt ist. Zwischen Auskleidungsmaterial 81 und Wandinnenfläche 80 entsteht hierbei ein Zwischenraum 91, welcher unter besonderen Umständen zusätzlich gespült werden kann. Der besondere Vorteil dieser Ausgestaltung besteht darin, dass ein bereits durch eine Beschichtung geschützter Befestigungsnocken 84 verwendet werden kann und mechanische Beschädigungen verhindert werden. Soweit ein Kontakt zwischen dem metallischen Andruckring 83 und dem Befestigungsnocken 84 vorliegt, kann zusätzlich eine Schutzfolie 92 vorgesehen werden.

Figur 7 zeigt in drei Ausführungsvarianten verschiedene Ausführungsformen der Befestigungsnocken, und zwar von links nach rechts einen trapezförmigen Nocken 95, einen dreieckförmig ausgebildeten Nocken 96 mit einer Verjüngung 97 sowie einen T-förmig ausgebildeten Nocken 98, welche eine Beschichtung 94 aufweisen. Die hier gezeigten Ausführungsbeispiele der Befestigungsnocken 95, 96, 98 sind nicht als einschränkend anzusehen und dienen lediglich als Anregungen für weitere Ausgestaltungen. Bereits aus den nachfolgenden Figuren sind weitere Varianten der Befestigungsnocken entnehmbar.

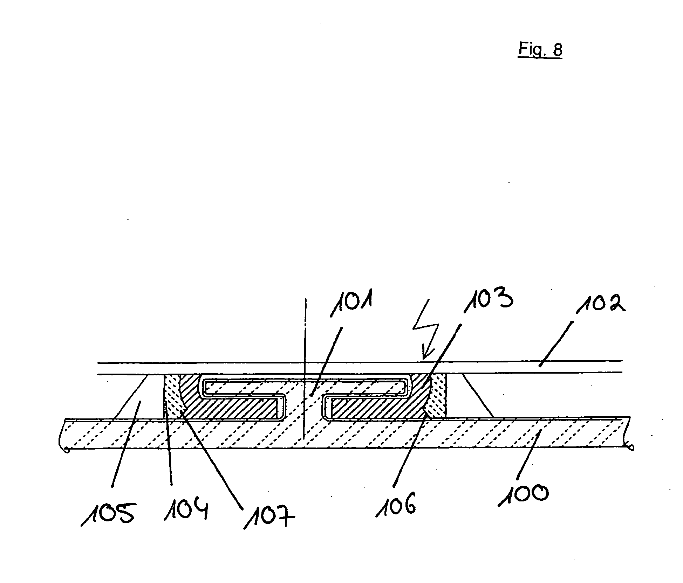

Figur 8 zeigt in einer geschnittenen Seitenansicht eine weitere Ausgestaltung der Befestigungselemente, und zwar werden diese auf einer Wandinnenfläche 100 mit einem Befestigungsnocken 101 verwendet, um ein Auskleidungsmaterial 102 mit einem zweiteiligen Kunststoffring 103 zu verschweißen. Der zweiteiligen Kunststoffring 103 wird durch einen zweiteiligen Andruckring 104 zusammengehalten, wobei im Weiteren mit Hilfe eines einteiligen Außenringes 105 zunächst ein Anpressdruck auf den Andruckring 104 und sodann auf den Kunststoffring 103 aufgebracht wird. Der hierzu verwendete Befestigungsnocken 101 ist im Querschnitt T-förmig ausgebildet, sodass die Kunststoffringe 103 den Befestigungsnocken 101 hintergreifen können, wobei zusätzlich zwischen Kunststoffring 103 und äußeren Andruckring 104 durch eine Einkerbung 106 und eine Ausbuchtung 107 ein Formschluss erzielt wird. Der Formschluss, welcher sich in der Nähe der Wandinnenfläche 100 befindet, verhindert in diesem speziellen Ausgestaltungsfall zusätzlich ein Kippen der Kunststoffringe. Soweit als Außenring 105 ein Kunststoffring verwendet wird, könnte dieser gegebenenfalls zusätzlich ebenso wie die Kunststoffringe 103 mit dem Auskleidungsmaterial 102 oder als Metallring mit der Wandinnenfläche 100 verschweißt werden.

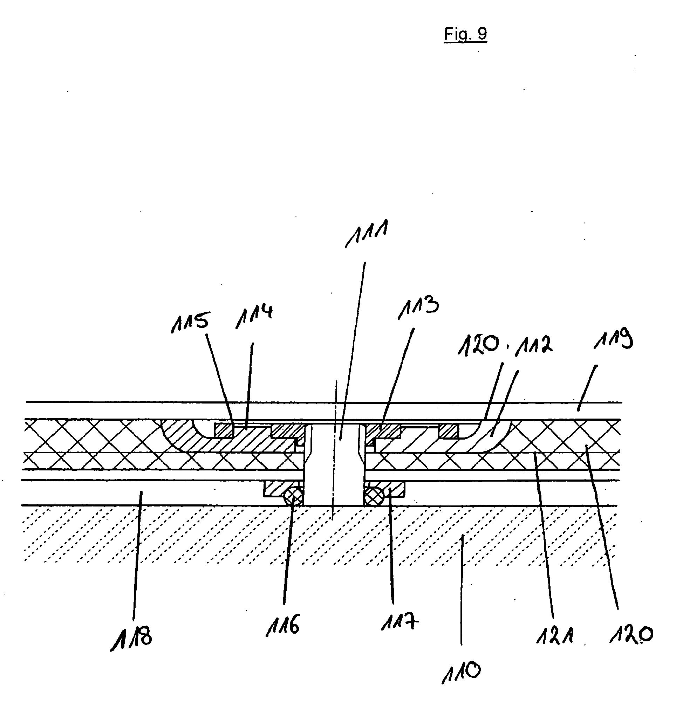

Figur 9 zeigt in einer geschnittenen Seitenansicht eine weitere Ausgestaltung für eine Befestigungseinrichtung an einer Wandinnenfläche 110 über einen Befestigungsbolzen 111, welcher unmittelbar mit der Wandinnenfläche 110 verbunden ist. Zum Einsatz kommt eine Kunststoffscheibe 112 und eine Andruckscheibe 113, wie sie bereits aus Figur 2 bekannt ist. Zur Erzielung eines Verdrehschutzes weist die Kunststoffscheibe 112 hervorstehende Nocken 114 auf, welche in korrespondierende Durchbrüche 115 der Andruckscheibe 113 eingreifen. Zur Erweiterung der aus Figur 2 bekannten Lösung liegt um den Befestigungsbolzen 111 ein Dichtungsring 116, welcher mit Hilfe einer Andruckscheibe 117 mit der Wandinnenfläche 110 verpresst werden kann. Auf der Andruckscheibe 117 liegt ein erstes Auskleidungsmaterial 118 auf, während das weitere Auskleidungsmaterial 119 auf der Kontaktfläche 120 der Kunststoffscheibe 112 aufliegt und mit dieser verschweißt werden kann. Das der Wandinnenfläche 110 nächstliegende Auskleidungsmaterial 118 sowie das darüber befindliche Auskleidungsmaterial 119 bilden einen Zwischenraum 120, welcher mit einer Abstandsgaze 121 ausgefüllt ist.

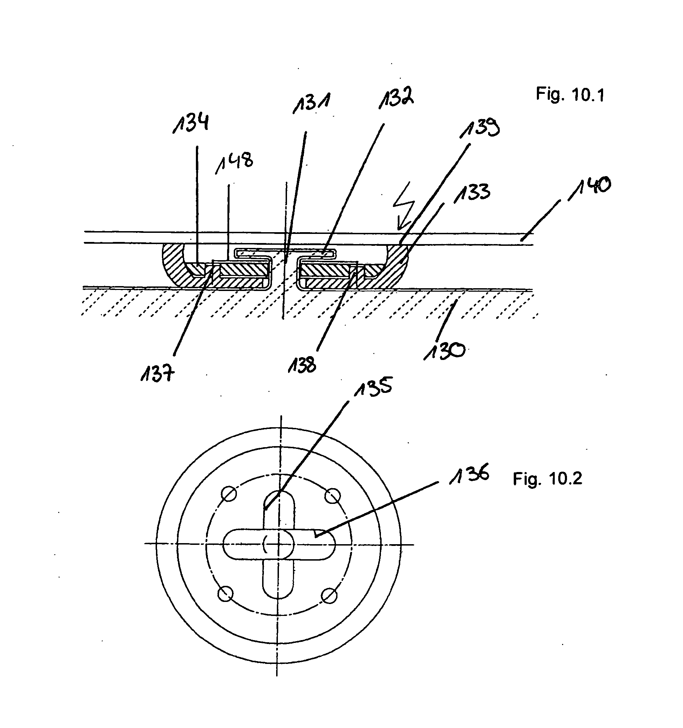

Die Figuren 10.1 und 10.2 zeigt in einer geschnittenen Seitenansicht und einer Draufsicht eine weitere Ausführungsvariante für eine Befestigungseinrichtung. Bei dieser besonderen Variante ist die Wandinnenfläche 130 und die Befestigungsnocken 131 bereits beschichtet, wobei die Befestigungsnocken 131 am vorderen hervorstehenden Ende 132 stabförmig ausgebildet sind. Die Befestigungsnocken 131 sind einstückig mit der Wandinnenfläche 130 verbunden und dienen im Weiteren zur Aufnahme einer einteiligen Kunststoffscheibe 133 und einer einteiligen Andruckscheiben 134. Sowohl die Kunststoffscheibe 133 als auch die Andruckscheiben 134 besitzen eine schlitzförmige Ausnehmung 135 beziehungsweise 136 und können somit auf den Befestigungsnocken 131 aufgesetzt werden. Nach Verdrehen der Andruckscheibe 134 kann diese hinter dem Befestigungsnocken 131 verriegelt werden, wobei gleichzeitig durch Ausnehmungen 137 und Nocken 138 ein Form- und Kraftschluss zwischen der Kunststoffscheibe 133 und der Andruckscheiben 134 herstellbar ist. Diese Montage ist besonders vorteilhaft, da auf den Befestigungsnocken 131 zunächst die Kunststoffscheibe 133 aufgesetzt wird und gegebenenfalls bereits um 90° Grad verdreht werden kann. Des Weiteren wird die Andruckscheiben 134 auf den Befestigungsnocken 131 aufgesetzt und ebenfalls um 90° Grad verdreht, sodass der Befestigungsnocken 131 hintergriffen wird. Mit Hilfe des entstehenden Formschlusses durch die Nocken 138 in den Ausnehmungen 137 besteht zusätzlich ein Verdrehschutz, sodass die Andruckscheibe 134 gegenüber der Kunststoffscheibe 133 nur mit Kraftaufwand verdreht werden kann und somit ein Kraft- und Formschluss mit einer Verpressung der Kunststoffscheibe 133 gegenüber der Wandinnenfläche 130 vorliegt. Über eine Kontaktfläche 139 erfolgt wiederum eine Verschweißung mit dem Auskleidungsmaterial 140, welches unmittelbar auf dieser Kontaktfläche aufliegt, wobei die Verschweißung mit Hilfe von elektromagnetischer Strahlung wie in den zuvor beschriebenen Ausführungsbeispielen erfolgen kann. Zwischen Befestigungsnocken 131 und Andruckscheibe 134 befindet sich eine Schutzfolie 148. Aus der Draufsicht ist deutlich ersichtlich wie die Ausnehmungen 135, 136 gestaltet sind und zeigen darüber hinaus, dass es sich um zwei einteilige Scheiben, und zwar der Kunststoffscheibe 133 und der Andruckscheibe 134, handelt.

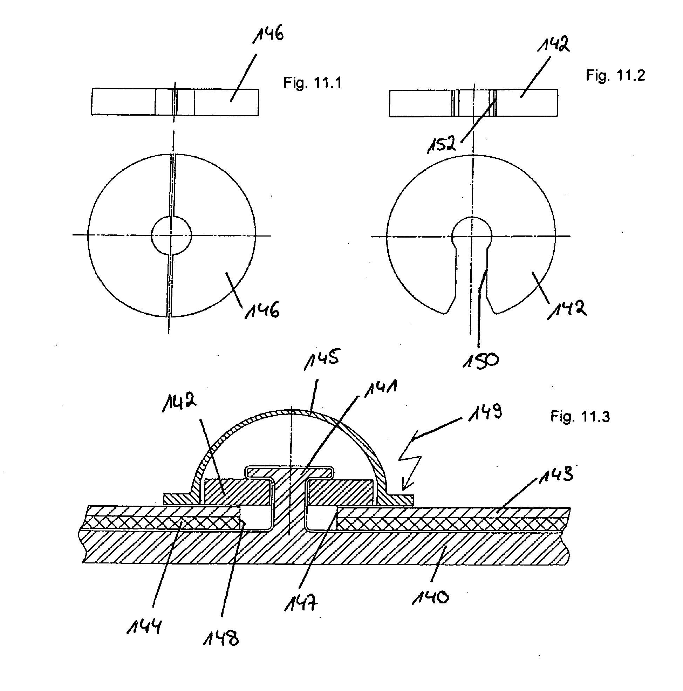

Die Figuren 11.1 bis 11.3 zeigt in einer geschnittenen Seitenansicht eine Wandinnenfläche 140 mit einem Befestigungsnocken 141, welcher im Querschnitt T-förmig ausgebildet ist. Die Befestigungselemente bestehen in diesem Fall aus einer einseitig geschlitzten Kunststoffscheibe 142 oder einer geteilten Kunststoffscheibe 146, welche wahlweise unter den Befestigungsnocken 141 geschoben werden können. Zuvor wird das Auskleidungsmaterial 143 über den Befestigungsnocken 141 geschoben, wobei das Auskleidungsmaterial 143 einen Durchbruch 147 aufweist. Das Auskleidungsmaterial 143 liegt hierbei auf einem Abstandsmaterial 144 auf, welches ebenfalls einen Durchbruch 148 aufweist, sodass sowohl das Abstandmaterial 144 als auch das Auskleidungsmaterial 143 über den Befestigungsnocken 141 aufgeschoben werden können. Die Kunststoffscheibe 142 oder alternativ 146 wird nach dem Aufschieben des Auskleidungsmaterials 143 unter den Befestigungsnocken 141 geklemmt, sodass das Auskleidungsmaterial 143 zusammen mit dem Abstandsmaterial 144 gegen die Wandinnenfläche 140 gepresst wird. Zur Sicherung der Kunststoffscheibe 142 oder alternativ 146 wird eine haubenförmige Abdeckung 145 verwendet, welche die Kunststoffscheibe 143, 146 umgreift und mit Hilfe von elektromagnetischer Strahlung 149 mit dem Auskleidungsmaterial 143 verschweißt wird. Somit wird mit Hilfe der Abdeckung 145 eine Fixierung der Kunststoffscheibe 142, 146 erzielt, welche den erforderlichen Form- und Kraftschluss mit der Wandinnenfläche 140 herstellt. Oberhalb der geschnittenen Seitenansicht sind die beiden Kunststoffscheiben nochmals in einer Seitenansicht und Draufsicht dargestellt, woraus hervorgeht, dass die Kunststoffscheibe 142 eine schlitzförmige Ausnehmung 150 aufweist, während die Kunststoffscheibe 146 zwei geteilt aufgeführt ist.

### Bezugszeichenliste

- 1: Kunststoffscheibe
- 2: Metallscheibe
- 3: Rückwand
- 4: Bohrung
- 5: Kontaktfläche
- 6: Erhebung
- 7: Durchbruch
- 8: Bohrung
- 9: Vorsprung
- 10: Ausdrehung
- 11: Vertiefung
- 12: Auskleidungsmaterial
- 13: Zwischenlage
- 20: Kunststoffscheibe
- 21: Metallscheibe
- 22: Durchbruch
- 23: Erweiterung
- 24: Kontaktfläche
- 25: Vertiefungen
- 26: Erhebungen
- 27: Durchbruch
- 28: Durchbruch
- 30: Metallscheibe
- 31: Kunststoffscheibe
- 32: Auskleidungsmaterial
- 33: Wandinnenfläche
- 34: Durchbruch
- 35: Befestigungsbolzen
- 36: Durchbruch
- 37: Durchbruch
- 38: Unterlegscheibe
- 39: Mutter
- 40: Abdeckung
- 41: Anformung
- 42: Planfläche
- 43: Zwischenlage
- 44: elektromagnetische Strahlung
- 50: Kunststoffscheibe
- 51: Durchbruch
- 52: Metallscheibe
- 53: Kreisringelement
- 54: Zwischenlage
- 60: Auskleidungsmaterial
- 61: Wandinnenfläche
- 62: Befestigungsbolzen
- 63: Fixierscheibe
- 64: Lochung
- 65: Andruckscheibe
- 66: Mutter
- 67: Federring
- 68: Spülkanal
- 69: Zwischenraum
- 70: Bohrung
- 71: Abdeckung
- 72: Nut
- 80: Wandinnenfläche
- 81: Auskleidungsmaterial
- 82: Kunststoffscheibe
- 83: Andruckscheibe
- 84: Befestigungsnocken
- 85: Befestigungsstift
- 86: Ausnehmung
- 87: Nocken
- 88: Kunststoffscheibe
- 89: Schweißnaht
- 90: Kontaktfläche
- 91: Zwischenraum
- 92: Schutzfolie
- 93: Beschichtung
- 94: Beschichtung
- 95: Nocken
- 96: Nocken
- 97: Verjüngung
- 98: Befestigungsnocken
- 100: Wandinnenfläche
- 101: Befestigungsnocken
- 102: Auskleidungsmaterial
- 103: Kunststoffring
- 104: Andruckring
- 105: Außenring
- 106: Einkerbung
- 107: Ausbuchtung
- 109: Wandinnenfläche
- 110: Wandinnenfläche
- 111: Befestigungsbolzen
- 112: Kunststoffscheibe
- 113: Andruckscheibe
- 114: Nocken
- 115: Durchbruch
- 116: Dichtungsring
- 117: Andruckscheibe
- 118: Auskleidungsmaterial
- 119: Auskleidungsmaterial
- 120: Kontaktfläche
- 121: Abstandsgas
- 130: Wandinnenfläche
- 131: Befestigungsnocken
- 132: Ende
- 133: Kunststoffscheibe
- 134: Andruckscheibe
- 135: Ausnehmung
- 136: Ausnehmung
- 137: Ausnehmung
- 138: Nocken
- 139: Kontaktfläche
- 140: Wandinnenfläche
- 141: Befestigungsnocken
- 142: Kunststoffscheibe
- 143: Auskleidungsmaterial
- 144: Abstandsmaterial
- 145: Abdeckung
- 146: Kunststoffscheibe
- 147: Durchbruch
- 148: Schutzfolie
- 150: Ausnehmung

## Patentansprüche

1. Befestigungseinrichtung und ein Auskleidungsmaterial (12, 32, 60, 81, 102, 118, 119, 140, 143) für die Wandinnenfläche (33, 61, 80, 100, 109, 110, 130) einer von einem gasförmigen oder flüssigen Medium beaufschlagten tragenden Konstruktion, wie ein Behälter, Apparat, Kanal, Gehäuse oder eine Kolonne, wobei mehrere verteilt angeordnete Befestigungspunkte in Form von Befestigungselementen mit der Wandinnenfläche (33, 61, 80, 100, 109, 110, 130) verbunden und zur Befestigung des Auskleidungsmaterials (12, 32, 60, 81, 102,118, 119, 143) vorgesehen sind,
**dadurch gekennzeichnet,**
**dass** die Befestigungselemente aus einem Halteelement, welches mit dem Auskleidungsmaterial (12, 32, 60, 81, 102, 118, 119, 143) verbindbar ist, und einem Andruckelement, welches mit der Wandinnenfläche (33, 61, 80, 100, 109, 110, 130) verbunden ist, bestehen, wobei das Halteelement und das Andruckelement kraft- und/oder formschlüssig miteinander verbunden sind.

2. Befestigungseinrichtung nach Anspruch 1,
**dadurch gekennzeichnet,**
**dass** die Befestigungselemente zumindest aus einer Kunststoffscheibe (1, 20, 50, 82, 112, 133, 142) als Halteelement und einer Andruckscheibe (2, 21, 52, 83, 113, 117, 134) als Andruckelement bestehen.

3. Befestigungseinrichtung nach Anspruch 1 oder 2,
**dadurch gekennzeichnet,**
**dass** die Andruckelemente über einen Befestigungsbolzen (35, 62, 111), Befestigungsnocken (84, 98, 101, 131, 141) oder Befestigungsschienen mit der Wandinnenfläche (33, 61, 80, 100, 109, 110, 130, 140) verbindbar sind.

4. Befestigungseinrichtung nach Anspruch 2 oder 3,
**dadurch gekennzeichnet,**
**dass** die Kunststoffscheibe (1, 20, 50, 82, 112, 133, 142) mit einer eben ausgebildeten Fläche an der Wandinnenfläche (33, 61, 80, 100, 109, 110, 130) zu liegen kommt und mehrere konzentrisch angeordnete erhöhte Kontaktflächen (5, 90, 120, 139) aufweist.

5. Befestigungseinrichtung nach Anspruch 4,
**dadurch gekennzeichnet,**
**dass** die Kontaktflächen (5, 90, 120, 139) aus einem äußeren Kreisringsegment und zumindest einem inneren Kreisringsegment oder mehreren ringförmig angeordneten Erhebungen (6) bestehen, welche vorzugsweise rund ausgebildet sind.

6. Befestigungseinrichtung nach Anspruch 5,
**dadurch gekennzeichnet,**
**dass** die inneren Kontaktflächen und Erhebungen (6) gegenüber dem äußeren Kreisringsegment in der Tiefe zurückgesetzt ausgeführt sind.

7. Befestigungseinrichtung nach Anspruch 4, 5 oder 6,
**dadurch gekennzeichnet,**
**dass** die Kunststoffscheibe (1, 20, 50) zusätzlich zu den vorhandenen Durchbrüchen zumindest eine, vorzugsweise mehrere radial verlaufende rinnenförmige Vertiefungen (11) aufweist.

8. Befestigungseinrichtung nach einem der Ansprüche 2 bis 7,
**dadurch gekennzeichnet,**
**dass** die Andruckscheibe (2, 21, 52, 83, 113, 117, 134) eine innere ringförmige Nut oder mehrere korrespondierende Durchbrüche zu den Erhebungen (6) der Kunststoffscheibe (1, 20, 50, 82, 112, 133, 142) aufweist, und/oder dass die Andruckscheibe (2, 21, 52, 83, 113, 117, 134) nach dem Einlegen in die Kunststoffscheibe (1, 20, 50, 82, 112, 133, 142) gegenüber den zur Verbindung mit dem Auskleidungsmaterial (12, 32, 60, 81, 102, 118, 119, 143) vorgesehenen Kontaktflächen zurückgesetzt angeordnet ist, und/oder dass die Andruckscheibe (2, 21, 52, 83, 113, 117, 134) zusätzliche korrespondierende Durchbrüche zu den radial verlaufenden Vertiefungen (11) aufweist.

9. Befestigungseinrichtung nach einem der Ansprüche 1 bis 8,
**dadurch gekennzeichnet,**
**dass** das Auskleidungsmaterial (12, 32, 60, 81, 102, 118, 119, 143) im Bereich der Befestigungsbolzen (35, 62, 111) eine Lochung aufweist und auf den Befestigungsbolzen (35, 62, 111) aufschiebbar ist, und/oder dass die Auskleidungsmaterialien (12, 32, 60, 81, 102, 118, 119, 143) im Bereich der Lochungen einen Kunststoffring zur Verstärkung aufweisen, welcher mit dem Auskleidungsmaterial (12, 32, 60, 81, 102, 118, 119, 140, 143) verschweißbar ist, und/oder dass das Auskleidungsmaterial (12, 32, 60, 81, 102, 118, 119, 143) mit einem Kunststoffring verschweißbar ist, welcher durch eine Andruckscheibe (2, 21, 52, 83, 113, 117, 134) abgedeckt mit der Wandinnenfläche (33, 61, 80, 100, 109, 110, 130, 140) mit Hilfe eines Gewindebolzens verschraubbar ist, wobei über den Gewindebolzen und dem Kunststoffring sowie der Andruckscheibe (2, 21, 52, 83, 113, 117, 134) eine haubenförmige Abdeckung (40) angeordnet und mit dem Auskleidungsmaterial (12, 32, 60, 81, 102, 118, 119, 143) verschweißt ist.

10. Befestigungseinrichtung nach einem der Ansprüche 2 bis 9,
**dadurch gekennzeichnet,**
**dass** die Andruckscheibe (2, 21, 52, 83, 113, 117, 134) oberhalb des Auskleidungsmaterials (12, 32, 60, 81, 102, 118, 119, 143) und des Kunststoffrings eine an die Größe des Kunststoffrings angepasste Ausdrehung aufweist.

11. Befestigungseinrichtung nach Anspruch 1, 2 oder 3,
**dadurch gekennzeichnet,**
**dass** die Befestigungselemente aus zumindest zwei Kreisringsegmenten als Andruckelemente bestehen, welche auf einem Befestigungsnocken (84, 98, 101, 131, 141) mit Hilfe von Verbindungsmitteln, beispielsweise Stiften, Stiftschrauben oder Bolzen, festlegbar sind und eine Kunststoffscheibe (1, 20, 50, 82, 112, 133, 142) aus zumindest zwei Kreisringsegmenten als Haltemittel aufweisen.

12. Befestigungseinrichtung nach Anspruch 11,
**dadurch gekennzeichnet,**
**dass** die Kreisringsegmente zum Verspannen eines Halteelementes vorgesehen sind, welches mit dem Auskleidungsmaterial (12, 32, 60, 81, 102, 118, 119, 143) verschweißbar ist.

13. Befestigungseinrichtung nach Anspruch 11 oder 12,
**dadurch gekennzeichnet,**
**dass** die Kunststoffscheibe (1, 20, 50, 82, 112, 133, 142) zumindest eine Kontaktfläche (5, 90, 120, 139) zur Verschweißung mit dem Auskleidungsmaterial (12, 32, 60, 81, 102, 118, 119, 143) aufweist.

14. Befestigungseinrichtung nach einem der Ansprüche 11 bis 13,
**dadurch gekennzeichnet,**
**dass** die Halteelemente und Kreisringsegmente zusätzlich durch zumindest einen Formschluss miteinander verbunden sind.

15. Befestigungseinrichtung nach einem der Ansprüche 11 bis 14,
**dadurch gekennzeichnet,**
**dass** die Befestigungselemente Klemmscheiben aufweisen, welche unter die Halteelemente einpressbar sind und gegebenenfalls mit der Wandinnenfläche (33, 61, 80, 100, 109, 110, 130, 140) und/oder dem Halteelement verschweißbar sind, und/oder dass die Befestigungselemente aus zumindest zwei Kreisringsegmente als Halteelemente und zumindest aus zwei Spannringen als Andruckelemente bestehen, welche auf einem Befestigungsnocken (84, 98, 101, 131, 141) festlegbar sind wobei die Kreisringsegmente und Spannringe durch einen auf einer Axialfläche korrespondierenden Formschluss miteinander verbunden sind und durch einen einteiligen, umhüllenden Außenring (105) verspannt sind, und/oder dass die Befestigungselemente ein Dichtungselement (116) aufweisen, welches vorzugsweise auf den Befestigungsbolzen (35, 62, 111) aufgeschoben und mit Hilfe eines Klemmringes verpresst ist, wobei zusätzlich eine Verschweißung des Klemmringes mit einem Auskleidungsmaterial (12, 32, 60, 81, 102, 118, 119, 143) erfolgt.

16. Befestigungseinrichtung nach Anspruch 15,
**dadurch gekennzeichnet.**
**dass** zwischen dem Auskleidungsmaterial (12, 32, 60, 81, 102, 118, 119, 143) und der Abdeckung (40, 71) beziehungsweise dem Kunststoffring eine elektromagnetische Strahlung absorbierende Zwischenlage (43, 54) angeordnet ist.

17. Befestigungseinrichtung nach Anspruch 15 oder 16,
**dadurch gekennzeichnet,**
**dass** die Befestigungsbolzen (35, 62, 111), Befestigungsnocken (84, 98, 101, 131, 141) oder Befestigungsschienen beschichtet ausgeführt sind und insbesondere mit einem Kunststoff-, Keramik- oder Emaillieüberzug versehen sind, und/oder dass die Befestigungsnocken (35, 62, 111) trapezförmig, T-förmig, pilzförmig, dreieckförmig oder an ihrem freien Ende stabförmig ausgebildet sind.

18. Befestigungsvorrichtung nach Anspruch 1 und 17,
**dadurch gekennzeichnet,**
**dass** das Andruckelement und das Halteelement eine schlitzförmige Ausnehmung für einen Befestigungsnocken (35, 62, 111) aufweisen und mit korrespondierenden Nocken (138) und Ausnehmungen (137) ausgestattet sind, um einen Formschluss herzustellen.

19. Befestigungsvorrichtung nach Anspruch 1,
**dadurch gekennzeichnet,**
**dass** das Auskleidungsmaterial (12, 32, 60, 81, 102, 118, 119, 143) auf einem Befestigungsnocken (35, 62, 111) durch eine geschlitzte Klemmscheibe (142, 146) gehalten ist, welche durch eine verschweiße Abdeckung (145) nach der Montage formstabil gehalten ist.

## Claims

1. Securing means and lining material (12, 32, 60, 81, 102, 118, 119, 140, 143) for the wall inner surface (33, 61, 80, 100, 109, 110, 130) of a load-bearing construction, such as a container, apparatus, duct, housing, or column, which is acted upon by a gaseous or liquid medium, whereby multiple distributed securing points in the form of securing elements are connected to the wall inner surface (33, 61, 80, 100, 109, 110, 130) and provided to secure the lining material (12, 32, 60, 81, 102, 118, 119, 140, 143), **characterized in that** the securing elements consist of a holding element that is connectable to the lining material (12, 32, 60, 81, 102, 118, 119, 143), and a pressing element which is connected to the inner wall surface (33, 61, 80, 100, 109, 110, 130), wherein the holding element and the pressing element are connected to each other in a force- and/or form-fit.

2. Securing means according to claim 1, **characterized in that** the securing elements consist of at least one plastic washer (1, 20, 50, 82, 112, 133, 142) that is a holding element and one pressing washer (2, 21, 52, 83, 113, 117, 134) that is a pressing element.

3. Securing means according to claim 1 or 2, **characterized in that** the pressing elements are connectable to the inner wall surface (33, 61, 80, 100, 109, 110, 130, 140) via a securing bolt (35, 62, 111), a securing cam (84, 98, 101, 131, 141) or securing bars.

4. Securing means according to claim 2 or 3, **characterized in that** the plastic washer (1, 20, 50, 82, 112, 133, 142) rests against a flatly formed surface on the wall inner surface (33, 61, 80, 100, 109, 110, 130) and has multiple concentric, raised contact surfaces (5, 90, 120, 139).

5. Securing means according to claim 4, **characterized in that** the contact surfaces (5, 90, 120, 139) consist of one external circular ring segment and at least one internal circular ring segment or multiple ring-shaped ridges (6), which are preferably round.

6. Securing means according to claim 5, **characterized in that** the inner contact surfaces and ridges (6) are designed to be offset downwards relative to the external circular ring element.

7. Securing means according to claim 4, 5 or 6, **characterized in that** the plastic washer (1, 20, 50) has, in addition to the existing openings, at least one, preferably multiple, groove-like indentations (11) that run radially.

8. Securing means according to one of claims 1 to 7, **characterized in that** the pressing washer (2, 21, 52, 83, 113, 117, 134) has an inner ring-shaped groove or multiple corresponding openings to the ridges (6) of the plastic washer (1, 20, 50, 82, 112, 133, 142), and/or that the pressing washer (2, 21, 52, 83, 113, 117, 134), after being inserted in the plastic washer (1, 20, 50, 82, 112, 133, 142), is attached in an offset manner relative to the contact surfaces provided to connect it with the lining material (12, 32, 60, 81, 102, 118, 119, 143), and/or that the pressing washer (2, 21, 52, 83, 113, 117, 134) has additional corresponding openings to the radial indentations (11).

9. Securing means according to one of claims 1 to 8, **characterized in that** the lining material (12, 32, 60, 81, 102, 118, 119) has a drilled hole in the area of the securing bolts (35, 62, 111) and can be shifted onto the securing bolt (35, 62, 111), and/or that the lining material (12, 32, 60, 81,102,118,119,143) has a plastic ring in the area of the drilled holes for the purpose of strengthening, which can be welded to the lining material (12, 32, 60, 81,102,118,119, 140, 143), and/or that the lining material (12, 32, 60, 81, 102, 118, 119, 143) can be welded to a plastic ring, which can be screwed in with a threaded bolt through a pressing washer (2, 21, 52, 83, 113, 117, 134) that is covered by the wall inner surface (33, 61, 80, 100, 109, 110, 130, 140), whereby a cap-shaped cover (40) is arranged over the threaded bolt and the plastic ring as well as the pressing washer (2, 21, 52, 83, 113, 117, 134) and that is welded to the lining material (12, 32, 60, 81, 102, 118, 119, 143).

10. Securing means according to one of claims 2 to 9, **characterized in that** the pressing washer (2, 21, 52, 83, 113, 117, 134) has an inner thread fitted to the size of the plastic ring and that is situated above the lining material (12, 32, 60, 81, 102, 118, 119, 143) and the plastic ring.

11. Securing means according to claim 1, 2 or 3, **characterized in that** the securing elements consist of at least two circular ring segments acting as pressing elements, which can be fixed to a securing cam (84, 98, 101, 131, 141) with a connection arrangement, for example pins, studs or bolts, and has a plastic washer (1, 20, 50, 82, 112, 133, 142) consisting of at least two circular ring segments acting as holding arrangement.

12. Securing means according to claim 11, **characterized in that** the circular ring segments are provided to brace a holding element, which can be welded to the lining material (12, 32, 60, 81, 102, 118, 119, 143).

13. Securing means according to claim 11 or 12, **characterized in that** the plastic washer (1, 20, 50, 82, 112, 133, 142) has at least one contact surface (5, 90, 120, 139) to be welded to the lining material (12, 32, 60, 81, 102, 118, 119, 143).

14. Securing means according to one of claims 11 to 13, **characterized in that** the holding elements and circular ring elements are also connected to each other by at least one form-fit.

15. Securing means according to one of claims 11 to 14, **characterized in that** the securing elements have clamping washers that can be pressed in below the holding elements and, if necessary, can be welded to the wall inner surface (33, 61, 80, 100, 109, 110, 130, 140) and/or the holding element, and/or that the securing elements consist of at least two circular ring segments acting as holding elements and at least two lock rings acting as pressing elements and which can be fixed to a securing cam (84, 98, 101, 131, 141) whereby the circular ring segments and lock rings are connected to each other with a form-fit on a corresponding axial surface and are braced by a single-part, encompassing external ring (105), and/or that the securing elements have a sealing element (116) that is preferably shifted onto the securing bolt (35, 62, 111) and pressed with a clamping ring, whereby the clamping ring is additionally welded to the lining material (12, 32, 60, 81, 102, 118, 119, 143).

16. Securing means according to claim 15, **characterized in that** an intermediate layer (43, 54) that absorbs electromagnetic rays is disposed between the lining material (12, 32, 60, 81, 102, 118, 119, 143) and the cover (40, 71), or the plastic ring.

17. Securing means according to claim 15 or 16, **characterized in that** the securing bolts (35, 62, 111), securing cams (84, 98, 101, 131, 141) or securing bars are coated, in particular with a plastic, ceramic or enamel coating, and/or that the securing cams (35, 62, 111) are trapezoidal, T-shaped, mushroom-shaped, triangle-shaped or rod-shaped at their free ends.

18. Securing device according to claims 1 and 17, **characterized in that** the pressing element and the holding element have a slit-shaped recess for a securing cam (35, 62, 111) and are designed with corresponding cams (138) and recesses (137) to create a form-fit.

19. Securing device according to claim 1, **characterized in that** the lining material (12, 32, 60, 81, 102, 118, 119, 143) is held on a securing cam (35, 62, 111) by a slit clamping washer (142, 146), which is held dimensionally stable by a welded cover (145) following the assembly.

## Revendications

1. Dispositif de fixation d'un matériau de garniture (12, 32, 60, 81, 102, 118, 119, 140, 143) pour la surface intérieure de paroi (33, 61, 80, 100, 109, 110, 130) d'une construction de support sollicitée par un milieu gazeux ou liquide, telle qu'un conteneur, un appareil, un conduit, un carter ou une colonne, dans lequel plusieurs points de fixation disposés répartis sont reliés sous la forme d'éléments de fixation à ladite surface intérieure de paroi (33, 61, 80, 100, 109, 110, 130) et sont prévus pour la fixation dudit matériau de garniture (12, 32, 60, 81, 102, 118, 119, 143), **caractérisé par le fait que** les éléments de fixation sont constitués d'un élément de retenue, qui peur être relié au matériau de garniture (12, 32, 60, 81, 102, 118, 119, 143), et d'un élément de pression, qui est relié à la surface intérieure de paroi (33, 61, 80, 100, 109, 110, 130), l'élément de retenue et l'élément de pression étant reliés entre eux par adhérence ou par liaison de forme.

2. Dispositif de fixation selon la revendication 1, **caractérisé par le fait que** les éléments de fixation sont constitués au moins d'une rondelle en plastique (1, 20, 50, 82, 112, 133, 142) en tant qu'élément de retenue et d'une rondelle de pression (2, 21, 52, 83, 113, 117, 134) en tant qu'élément de pression.

3. Dispositif de fixation selon la revendication 1 ou 2, **caractérisé par le fait que** les éléments de pression peuvent être reliés par l'intermédiaire d'un boulon de fixation (35, 62, 111), d'ergots de fixation (84, 98, 101, 131, 141) ou de rails de fixation à la surface intérieure de paroi (33, 61, 80, 100, 109, 110, 130, 140).

4. Dispositif de fixation selon la revendication 1, 2 ou 3, **caractérisé par le fait que** la rondelle en plastique (1, 20, 50, 82, 112, 133, 142) vient se placer avec une surface réalisée plane au niveau de la surface intérieure de paroi (33, 61, 80, 100, 109, 110, 130) et présente plusieurs surfaces de contact (5, 90, 120, 139) rehaussées disposées concentriquement.

5. Dispositif de fixation selon la revendication 4, **caractérisé par le fait que** les surfaces de contact (5, 90, 120, 139) sont constituées d'un segment d'anneau de cercle extérieur et d'un segment d'anneau de cercle intérieur et de plusieurs élévations (6) disposées en forme d'anneau, qui sont réalisées préférentiellement sous forme ronde.

6. Dispositif de fixation selon la revendication 5, **caractérisé par le fait que** les surfaces de contact intérieures et les élévations (6) sont réalisées en retrait en profondeur par rapport au segment d'anneau de cercle extérieur.

7. Dispositif de fixation selon la revendication 4, 5 ou 6, **caractérisé par le fait que** la rondelle en plastique (1, 20, 50) présente, en plus des ouvertures existantes, au moins une, préférentiellement plusieurs cavités en forme de gorge (11) s'étendant radialement.

8. Dispositif de fixation selon l'une des revendications 2 à 7, **caractérisé par le fait que** la rondelle de pression (2, 21, 52, 83, 113, 117, 134) présente une rainure intérieure en forme d'anneau ou plusieurs ouvertures correspondantes par rapport aux élévations (6) de la rondelle en plastique (1, 20, 50, 82, 112, 133, 142), et/ou que la rondelle de pression (2, 21, 52, 83, 113, 117, 134) est disposé, après insertion dans la rondelle plastique (1, 20, 50, 82, 112, 133, 142), en retrait par rapport aux surfaces de contact prévues pour la liaison avec le matériau de garniture (12, 32, 60, 81, 102, 118, 119, 143), et/ou que la rondelle de pression (2, 21, 52, 83, 113, 117, 134) présente des ouvertures supplémentaires correspondantes par rapport aux cavités (11) s'étendant radialement.

9. Dispositif de fixation selon l'une des revendications 1 à 8, **caractérisé par le fait que** le matériau de garniture (12, 32, 60, 81, 102, 118, 119, 143) présente une perforation dans la zone des boulons de fixation (35, 62, 111) et peut être poussé sur le boulon de fixation (35, 62, 111), et/ou que les matériaux de garniture (12, 32, 60, 81, 102, 118, 119, 143) présentent dans la zone des perforations une bague en plastique pour le renforcement, qui peut être soudé avec le matériau de garniture (12, 32, 60, 81, 102, 118, 119, 140, 143), et/ou que le matériau de garniture (12, 32, 60, 81, 102, 118, 119, 143) peut être soudé avec une bague en plastique, qui peut être vissée, recouverte d'une rondelle de pression (2, 21, 52, 83, 113, 117, 134), sur la surface intérieure de paroi (33, 61, 80, 100, 109, 110, 130, 140) à l'aide d'un goujon fileté, un moyen de recouvrement en forme de capot (40) étant disposé au-dessus des goujons filetés et de la bague en plastique ainsi que de la rondelle de pression (2, 21, 52, 83, 113, 117, 134) et étant soudé avec le matériau de garniture (12, 32, 60, 81, 102, 118, 119, 143).

10. Dispositif de fixation selon l'une des revendications 2 à 9, **caractérisé par le fait que** la rondelle de pression (2, 21, 52, 83, 113, 117, 134) présente au-dessus du matériau de garniture (12, 32, 60, 81, 102, 118, 119, 143) et de la bague en plastique un alésage adapté à la taille de la bague en plastique.

11. Dispositif de fixation selon la revendication 1, 2 ou 3, **caractérisé par le fait que** les éléments de fixation sont constitués d'au moins deux segments d'anneau de cercle en tant qu'éléments de pression, qui peuvent être fixés sur un ergot de fixation (84, 98, 101, 131, 141) à l'aide de moyens de liaison, par ex. des broches, des goujons filetés ou des boulons et présentent une rondelle en plastique (1, 20, 50, 82, 112, 133, 142) constituée d'au moins deux segments d'anneau de cercle en tant que moyen de retenue.

12. Dispositif de fixation selon la revendication 11, **caractérisé par le fait que** les segments d'anneau de cercle sont prévus pour serrer un élément de retenue, qui peut être soudé avec le matériau de garniture (12, 32, 60, 81, 102, 118, 119, 143).

13. Dispositif de fixation selon la revendication 11 ou 12, **caractérisé par le fait que** la rondelle en plastique (1, 20, 50, 82, 112, 133, 142) présente au moins une surface de contact (5, 90, 120, 139) pour le soudage avec le matériau de garniture (12, 32, 60, 81, 102, 118, 119, 143).

14. Dispositif de fixation selon l'une des revendications 11 à 13, **caractérisé par le fait que** les éléments de retenue et segments d'anneau de cercle sont reliés entre eux avec en outre au moins une liaison de forme.

15. Dispositif de fixation selon l'une des revendications 11 à 14, **caractérisé par le fait que** les éléments de fixation présentent des rondelles de serrage, qui peuvent être enfoncées sous les éléments de retenue et peuvent le cas échéant être soudées avec la surface intérieure de paroi (33, 61, 80, 100, 109, 110, 130, 140) et/ou avec l'élément de retenue, et/ou que les éléments de fixation sont constitués d'au moins deux segments d'anneau de cercle en tant qu'éléments de retenue et d'au moins deux bagues de serrage en tant qu'éléments de pression, qui peuvent être fixés sur un ergot de fixation (84, 98, 101, 131, 141), les segments d'anneau de cercle et les bagues de serrage étant reliés entre eux par une liaison de forme correspondante sur une surface axiale et serrés par une bague extérieure (105) enveloppante en une pièce, et/ou que les éléments de fixation présentent un élément d'étanchéité (116), qui est poussé préférentiellement sur le boulon de fixation (35, 62, 111) et est pressé à l'aide d'une bague de serrage, un soudage de la bague de serrage avec un matériau de garniture (12, 32, 60, 81, 102, 118, 119, 143) ayant en outre lieu.

16. Dispositif de fixation selon la revendication 15, **caractérisé par le fait qu'**une couche intermédiaire (43, 54) absorbant le rayonnement électromagnétique est disposée entre le matériau de garniture (12, 32, 60, 81, 102, 118, 119, 143) et le moyen de recouvrement (40, 71) ou la bague en plastique.

17. Dispositif de fixation selon la revendication 15 ou 16, **caractérisé par le fait que** les boulons de fixation (35, 62, 111), les ergots de fixation (84, 98, 101, 131, 141) ou les rails de fixation sont réalisés revêtus et sont en particulier pourvus d'un revêtement en plastique, en céramique ou en émail, et/ou que les ergots de fixation (35, 62, 111) sont réalisés en forme de trapèze, de T, de champignon, de triangle ou de tige à leur extrémité libre.

18. Dispositif de fixation selon la revendication 1 et 17, **caractérisé par le fait que** l'élément de pression et l'élément de retenue présentent un évidement en forme de fente pour un ergot de fixation (35, 62, 111) et sont équipés d'ergots (138) et d'évidements (137) correspondants pour créer une liaison de forme.

19. Dispositif de fixation selon la revendication 1, **caractérisé par le fait que** le matériau de garniture (12, 32, 60, 81, 102, 118, 119, 143) est maintenu sur un ergot de fixation (35, 62, 111) par une rondelle de serrage (142, 146) fendue qui est maintenue sans déformation par un moyen de recouvrement (145) soudé après le montage.
